# EUROPEAN PATENT SPECIFICATION

(11) **EP 3 115 290 B1**
(45) Date of publication and mention of the grant of the patent: **08.04.2020**
(21) Application number: 16171309.4
(22) Date of filing: 25.05.2016
(51) Int. Cl.: B62K 25/28, B62M 7/04, B62D 17/00

(54) **REAR ARM, STRADDLED VEHICLE AND MANUFACTURE METHOD**
HINTERRADSCHWINGE, GRÄTSCHSITZFAHRZEUG UND HERSTELLUNGSVERFAHREN
BRAS ARRIÈRE, VÉHICULE À SELLE ET PROCÉDÉ DE FABRICATION

(30) Priority: 10.07.2015 JP 2015138426
(43) Date of publication of application: 11.01.2017
(73) Proprietor: Yamaha Hatsudoki Kabushiki Kaisha, Shizuoka-ken Shizuoka 438-8501 (JP)
(72) Inventor: Shimizu, Masafumi, Shizuoka, Shizuoka 438-8501 (JP); Okuda, Yuya, Shizuoka, Shizuoka 438-8501 (JP)
(74) Representative: Moreland, David

(56) References cited:
- EP-A2- 0 295 799
- EP-A2- 0 737 615
- EP-A2- 1 614 613
- JP-A- 2011 173 533
- US-A- 4 813 697

## Description

### FIELD OF INVENTION

The present invention relates to a rear arm, and a straddled vehicle, and a method of manufacturing a rear arm. The rear arm may be mountable or mounted on a straddled vehicle.

### BACKGROUND TO INVENTION

In a straddled vehicle, a large load may be applied on a rear arm, which swingably supports a wheel. Further, bending and twisting forces in not only a swing direction but also in any direction are applied to the rear arm. A rear arm is required to have a high strength that can resist such forces. In addition, when a bending or twisting force in a swing direction, or any direction, is applied to the rear arm, the rear arm is deformed in various forms. Too large a deformation may change the angle of the axle. As a result, the rider operating the vehicle may feel that something is wrong. Thus, the rear arm is also required to have a stiffness for suppressing deformation.

However, increasing the weight of the rear arm to increase strength or stiffness results in the parts under the spring having increased weight. This reduces the maneuverability of the straddled vehicle. Thus, a rear arm is required to have strength and stiffness and, at the same time, to be light-weight.

For example, the portion of the rear arm near the pivot shaft may be a hollow box to increase the section modulus thereof, thereby providing strength and stiffness and, at the same time, providing a light-weight vehicle. Traditionally, rear arms with such a construction have been manufactured by gravity casting. Instead, in recent years, as the production has been increased, die casting has become popular where the mold is filled with a melt at high speed and under high pressure and the melt solidifies, contributing to improvements in productivity. For example, JP 2004-106571 A (YAMAHA) and JP 5400662 B2 (HONDA) disclose that a right arm and left arm are formed by die casting and welded together to produce a rear arm. JP 2011 173533 A is considered as the closest prior art for claims 1 and 15.

Die casting provides a product with a smoother surface in a shorter time than gravity casting. When die casting is used to form a hollow rear arm, separate right and left arms must be cast, as in the conventional art discussed above. In such cases, the right arm and left arm are joined to form a rear arm. Joining the right and left arms by welding improves the stiffness of the portions at which such are joined.

However, welding can easily create distortion in the right and left arms. A large distortion would make it difficult to ensure that the right and left arms are in a certain relative positional relationship; thus, sophisticated skills are needed for welding. Further, machining and quality control are needed to correct the distortion in the rear arm created by welding. This increases manufacturing costs.

In view of this, the present invention discloses a rear arm where right and left arms produced by die casting can be easily joined without welding and which still ensures sufficient stiffness, and also discloses a method of manufacturing same.

It is an object of at least one embodiment of at least one aspect of the present invention to obviate or at least mitigate one or more problems or disadvantages in the prior art.

### SUMMARY OF INVENTION

Various aspects of the present invention are defined in the independent claims appended hereto. Some optional and/or preferred features are defined in the dependent claims appended hereto.

According to a first aspect of the present invention there is provided rear arm for a straddled vehicle, the rear arm comprising a front portion having a pivot shaft hole into which a pivot shaft is insertable, a hollow portion located rearward of the pivot shaft hole, and a rear portion extending rearward from the hollow portion and having an axle hole into which an axle of a rear wheel is insertable, the rear arm further comprising:
a right arm; and
a left arm joined to the right arm, wherein
the right arm is a one piece die cast body comprising a front right portion and a rear right portion, the front right portion having a right pivot shaft hole forming a right portion of the pivot shaft hole and having a front right wall defining a first space having a left side opened and forming a right portion of the hollow portion, the rear right portion extending rearward from the front right portion and having a right axle hole forming a right portion of the axle hole,
the left arm is a one piece die cast body comprising a front left portion and a rear left portion, the front left portion having a left pivot shaft hole forming a left portion of the pivot shaft hole and having a front left wall defining a second space having a right side opened and forming a left portion of the hollow portion, the rear left portion extending rearward from the front left portion and having a left axle hole forming a left portion of the axle hole,
the front right portion of the right arm and the front left portion of the left arm are joined to each other by a plurality of fastening members, and
a support boss for supporting one end of a rear suspension is integrally formed on only one of the right arm and the left arm joined to each other by the plurality of fastening members.

In the above arrangement, the right arm may comprise a front right portion having a first space with a left side thereof opened, and thus may have a shape suitable for being die-cast using a mold having a die-cutting direction in the left/right direction. The left arm may comprise a front left portion which may have a second space with its right side opened, and thus may have a shape suitable for being die-cast. When the right and left arms are fastened together by fastening members, the opening on the left side of the first space in the front right portion may face the opening on the right side of the second space in the front left portion. Thus, the rear arm may have a hollow portion located in the front portion in which the pivot shaft is located. This may increase the stiffness of the front portion in which the pivot shaft is provided to which a relatively large force is applied, and at the same time reduces the increase in weight. Further, the support boss may be located on the right or left arm. Thus, the support boss may not include a portion at which the right and left arms are joined. This may seek to ensure sufficient stiffness of the support boss, to which a relatively large force is applied.

This makes it possible to use fastening members to join the right and left arms to form a rear arm and, at the same time, to provide the stiffness required of the rear arm. That is, the required stiffness can be provided without welding the right arm and the left arm together. Thus, distortion created by welding does not occur. This makes it relatively easy to control the precision in the positions of the pivot shaft and support boss. For example, if the precision in the positions of the right pivot shaft hole and left pivot shaft hole and the precision in the position of the support boss are provided before the arms are joined, no or little additional machining is needed to provide the precision in the positions of these members after the arms are joined.

The support boss may be located in a central portion of the rear arm as measured in a left/right direction. Thus, the rear suspension may be supported near the center of the rear arm as measured in the left/right direction. This may make it easier to reduce a size of the rear arm as measured in the left/right direction than implementations where the rear suspension is supported at a position biased toward the left or right relative to the rear arm. This may make it easy to position the rear arm in the straddled vehicle efficiently taking the positional relationship thereof and other parts such as muffler or chain into consideration.

At least one of matching planes at which the front right wall of the right arm and the front left wall of the left arm contact each other may be displaced, from a center plane including a center of the pivot shaft hole system as measured in the left/right direction, toward one of the right and left arms where the support boss is not located. This may make it easier to position the support boss in the central portion of the rear arm as measured in the left/right direction while providing such on one of the right and left arms.

The matching planes may comprise a plane located in the central portion as measured in the left/right direction and a plane displaced, from the plane located in the central portion, toward the one of the right and left arms where the support boss is not located. In the areas where the matching planes are located in the central portion as measured in the left/right direction, the difference between the size of the right arm as measured in the left/right direction and the size of the left arm as measured in the left/right direction may be small. This may prevent the size of one of the right and left arms as measured in the left/right direction from becoming extremely large compared with the size of the other arm. This may make it relatively easy to perform die cutting during die casting of the right or left arm.

One of the front right wall and the front left wall may have a side wall portion which may define the hollow portion from a side. In this case, the side wall portion may have a recess extending from the side wall portion toward the other one of the front right wall and the front left wall. The recess may have a bottom forming a fastening seat for fastening by the fastening member. Thus, the bottom of the recess recessed from one of the side wall portions of the front right wall and the front left wall toward the other one may form a fastening seat for the fastening member. This may reduce the length of the fastening members on the side wall portions compared with implementations where no recess is provided.

The recess may be located on one of the right and left arms where the support boss is not located. This may reduce the size of the recess as measured in the depth direction compared with implementations where a recess is provided on the arm where the support boss is located. This may result in a downsized opening of the recess.

The support boss may be located on one of a lower wall defining the first space of the front right portion from below and a lower wall defining the second space of the front left portion from below. Thus, the lower surface of the rear arm can support the rear suspension. In implementations where the lower surface of the rear arm supports one end of the rear suspension, the other end of the rear suspension may often be supported on a member located higher than the rear arm. In such implementations, the rear suspension may be positioned to extend from below the rear arm through a suspension hole, which may be formed between the right and left arms and located rearward of the pivot shaft of the rear arm. In such arrangements, it may be difficult to offset the support boss from the central portion as measured in the left/right direction toward the left or right. In the present embodiment, as described above, the support boss can be located on one of the right and left arms and still located in the central portion of the rear arm as measured in the left/right direction. Thus, arrangements in which the rear suspension is supported by a member located lower than the rear arm may be suitable for the present embodiment.

The front right portion of the right arm may have a right interior wall portion defining the first space from front. The front left portion of the left arm may have a left interior wall portion defining the second space from front or rear. In this case, a left edge of the right interior wall portion and a right edge of the left interior wall portion may be constructed so as to contact each other. This may further increase the stiffness of the front portion of the rear arm.

The fastening member may be located at each of positions corresponding to an upper edge and a lower edge of the right interior wall portion and the left interior wall portion. Thus, ensuring of the stiffness of the portions joined by the fastening members can be efficiently achieved.

The fastening member may comprise a fastening member for fastening the right interior wall portion and the left interior wall portion on a plane at which the right interior wall portion and the left interior wall portion contact each other. Thus, the ensuring of the stiffness of the portions joined by the fastening members can be achieved more efficiently.

The fastening member may comprise a plurality of fastening members arranged along the right interior wall portion or the left interior wall portion. Thus, the ensuring of the stiffness of the portions joined by the fastening members can be achieved more efficiently.

The support boss may be positioned to cross a virtual extension plane of the right interior wall portion or the left interior wall portion extended upward or downward. This may increase the effects of the right or left wall portion increasing the stiffness against forces that have been transmitted via the support boss.

A cover may be further provided for covering a portion of the fastening member exposed toward an outside of the rear arm. Thus, the exposed portions of the fastening members may not be visible. This may improve appearance.

The right pivot shaft hole of the front right portion and the left pivot shaft hole of the front left portion may be arranged in a continuous manner in a left/right direction. The rear arm may further comprise a collar which may be in contact with both an inner periphery of the right pivot shaft hole and an inner periphery of the left pivot shaft hole. This may make it easier to precisely position the right pivot shaft hole of the right arm and the left pivot shaft hole of the left arm in a coaxial manner. For example, if the precision in the positions of the right pivot shaft hole and left pivot shaft hole is provided before the arms are joined, no or little additional machining may be needed to provide the precision in the positions of these members after the arms are joined.

The front right wall may comprise a lower wall defining the first space of the front right portion from below. The front left wall may comprise a lower wall defining the second space of the front left portion from below. In this case, the lower wall of the front right portion and the lower wall of the front left portion may have matching planes that contact each other. The lower wall of the front right wall or the lower wall of the front left wall may have a groove formed by notching the matching plane for the lower wall of the front right wall or the lower wall of the front left wall. The groove may extend in a thickness direction of the lower wall from an interior to an exterior.

The right and left arms may be joined. The lower wall of the front right portion may be in contact with the lower wall of the front left portion. In this arrangement, the groove formed on the matching plane may form a through-hole in the lower wall. For example, when liquid such as water enters the hollow portion of the rear arm, this liquid can be removed through the through-hole in the lower wall.

According to a second aspect of the present invention there is provided a straddled vehicle comprising a rear arm according to a first aspect of the present invention.

According to a third aspect of the present invention there is provided a method of manufacturing a rear arm for a straddled vehicle, the rear arm comprising a front portion, having a pivot shaft hole into which a pivot shaft is insertable and a hollow portion located rearward of the pivot shaft hole, and a rear portion extending rearward from the hollow portion and having an axle hole into which an axle of a rear wheel is insertable, the manufacturing method comprising:
right arm casting step that integrally forms, by die casting, a right arm comprising a front right portion and a rear right portion, the front right portion having a right pivot shaft hole forming a right portion of the pivot shaft hole and having a front right wall defining a first space having a left side opened and forming a right portion of the hollow portion, the rear right portion extending rearward from the front right portion and having a right axle hole forming a right portion of the axle hole;
a left arm casting step that integrally forms, by die casting, a left arm comprising a front left portion and a rear left portion, the front left portion having a left pivot shaft hole forming a left portion of the pivot shaft hole and having a front left wall defining a second space having a right side opened and forming a left portion of the hollow portion, the rear left portion extending rearward from the front left portion and having a left axle hole forming a left portion of the axle hole; and
a joining step that joins the front right portion of the right arm and the front left portion of the left arm using a plurality of fastening members; wherein
the right arm casting step or the left arm casting step integrally forms a support boss for supporting one end of a rear suspension on only one of the right arm and the left arm jointed to each other by the plurality of fastening members.

The above manufacturing method can produce a rear arm with high stiffness having a hollow portion located in the front portion using a right and left arms having a construction suitable for being die-cast. Further, since the support boss may be only provided on one of the right and left arms, it may be relatively easy to ensure sufficient stiffness of the support boss and sufficient strength of the support boss. This may make it possible to ensure sufficient strength and stiffness of the rear arm when the right and left arms are joined using a fastening member. That is, it may be possible to ensure sufficient stiffness without joining the right and left arms by welding. Since no distortion by welding occurs, it may be relatively easy to control the precision in the positions of the pivot shaft and support boss during the manufacture process. Further, since the support boss may not be t divided into left and right portions, no or little processing such as machining is needed to align left and right portions of a support boss.

With the rear arm and manufacture method in embodiments of the present invention, a right and left arms produced by die casting can be easily joined without welding and still sufficient stiffness can be ensured.

### BRIEF DESCRIPTION OF DRAWINGS

Embodiments of the present invention will now be described, by way of example only, with reference to the accompanying drawings, which are:
- **FIG. 1**: a left side view of a motorcycle 10 in an embodiment;
- **FIG. 2**: a top plan view of the rear arm 15;
- **FIG. 3**: a right side view of the left arm 2 of FIG. 2;
- **FIG. 4**: a right side view of the rear arm 15 of FIG. 2;
- **FIG. 5**: an illustration of an arrangement of the rear suspension attached to the rear arm 15 of FIG. 4;
- **FIG.** 6: an illustration of another arrangement of the rear suspension attached to the rear arm 15 of FIG. 4;
- **FIG. 7**: a rear view of the rear arm 15 of FIG. 2;
- **FIG. 8**: an illustration of a construction of components around the groove as viewed from outside the rear arm;
- **FIG. 9**: an illustration of a construction of the left and right pivot shaft holes into which collars have been inserted;
- **FIG. 10**: a cross-sectional view taken on line E-E of FIG. 9;
- **FIG. 11**: an illustration of an arrangement in which a cover is provided on the rear arm of FIG. 4; and
- **FIG. 12**: a cross section of the cover 36 taken on line F-F of FIG. 11.

### DETAILED DESCRIPTION OF DRAWINGS

A rear arm and a straddled vehicle according to an embodiment of the present invention will now be described with reference to the accompanying drawings. In the present embodiment, a motorcycle will be described as an example of the straddled vehicle. The same or corresponding components in the drawings are labeled with the same numerals and/or characters and will not be described repeatedly. The sizes of the components in the drawings do not always exactly represent the sizes of actual components and the size ratios or the like of the components. In the following description, forward/front, rear(ward), left and right mean such directions as viewed by a rider sitting on the seat and gripping the handlebars.

### Overall Construction of Motorcycle

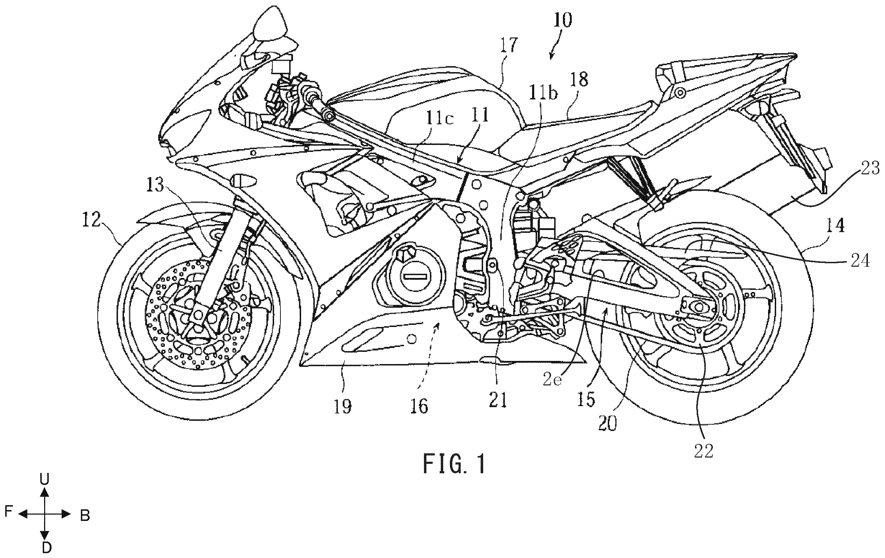

FIG. 1 is a left side view of a motorcycle 10 according to the present embodiment. In FIG. 1, arrow F indicates the forward direction, while arrow B indicates the rearward direction. Arrow U indicates the upward direction, while arrow D indicates the downward direction. The motorcycle 10 includes a vehicle body frame 11 and an engine 16. The engine 16 is supported on the vehicle body frame 11. In the implementation shown in FIG. 1, the engine 16 is suspended from a main frame 11c of the vehicle body frame 11. A fuel tank 17 is positioned above the engine 16. A seat 18 is positioned rearward of the fuel tank 17.

The front end of the vehicle body frame 11 forms a head pipe. A steering shaft is inserted into the head pipe so as to be rotatable. Handlebars are positioned on the top end of the steering shaft. A front fork 13 is positioned on the bottom end of the steering shaft. The front fork 13 rotatably supports the front wheel 12.

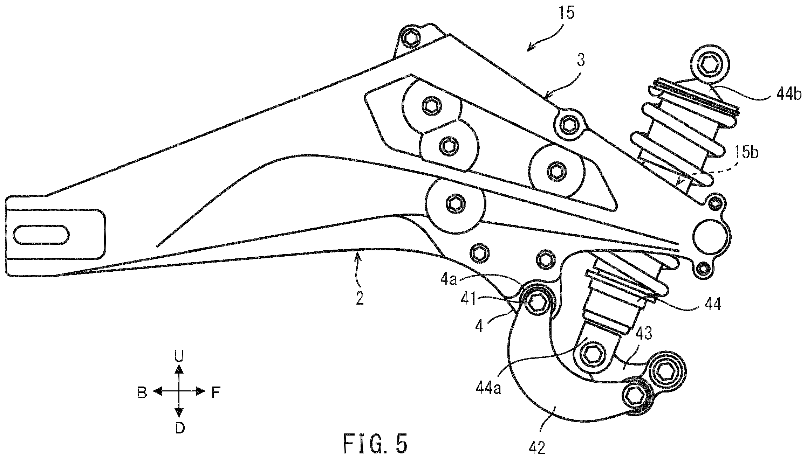

The rear end of the body frame 11 forms a rear frame 11b. A rear arm 15 is attached to the rear frame 11b in such a manner that the rear arm 15 can swing around a pivot shaft 21. The shaft center of the pivot shaft 21 extends in the vehicle width direction. The pivot shaft 21 extends through a pivot hole formed in the rear frame 11b and pivot shaft holes provided on the front end of the rear arm 15. The rear arm 15 supports the rear wheel 14. More specifically, the rear wheel 14 is rotatably attached to the rear end of the rear arm 15, where an axle having a shaft center extending in the vehicle width direction is provided therebetween. Although not shown, a rear suspension 44 (see FIG. 5) is connected between the rear arm 15 and vehicle body frame 11. One end of the rear suspension 44 is supported by the rear arm 15, where a link is provided therebetween. The other end of the rear suspension 44 is supported by the vehicle body frame 11.

A driven sprocket 22 is provided on the left side of the rear wheel 14. A chain 20 is wound around the driven sprocket 22 and a driving sprocket (not shown) attached to the drive shaft of the engine 16. The chain 20 is positioned to pass through an opening 2e in the rear arm 15. A chain cover 24 covers the chain 20 from above. Components of an exhaust system including a muffler 23 are positioned to the right of the rear wheel 14.

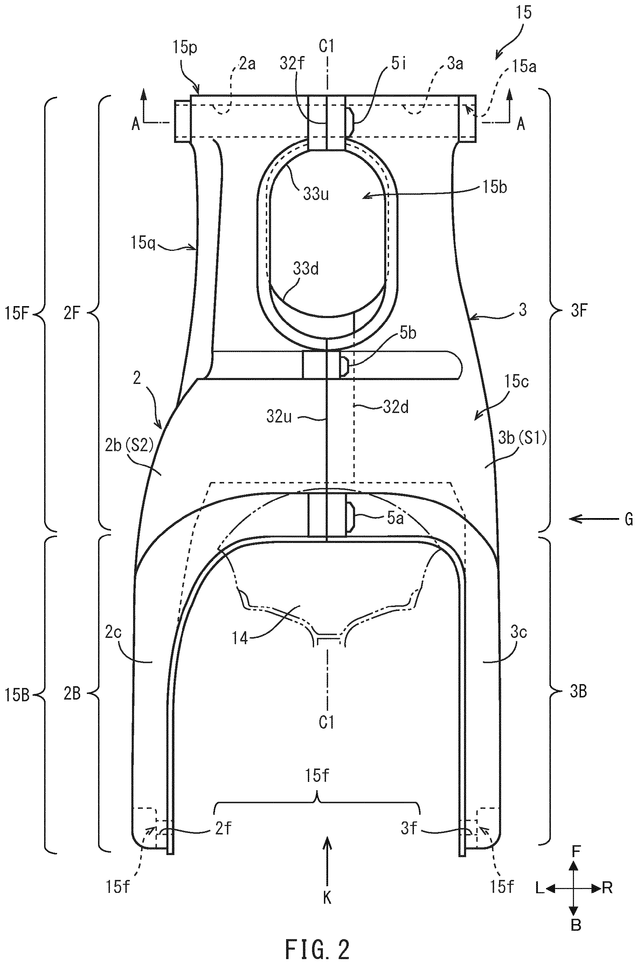

FIG. 2 is a top plan view of the rear arm 15. In FIG. 2, arrow F indicates the forward direction, while arrow B indicates the rearward direction. Arrow R indicates the right direction, while arrow L indicates the left direction. When the rear arm 15 is attached to the vehicle, the left/right direction of the rear arm 15 shown in FIG. 2 is equivalent to the vehicle width direction. The forward/rearward direction of the rear arm 15 is equivalent to the forward/rearward direction of the vehicle.

The rear arm 15 comprises a front portion 15F having a pivot shaft hole system or arrangement 15a into which the pivot shaft 21 is to be inserted, and a rear portion 15B having an axle hole system 15f into which the axle of the rear wheel 14 is to be inserted.

The front portion 15F comprises a pivot connecting portion 15p to be connected to the pivot shaft 21. The pivot connecting portion 15p is cylindrical. The pivot shaft hole system 15a is formed in the pivot connecting portion 15p. The shaft center of the pivot shaft hole system 15a extends in the left/right direction.

The front portion 15F of the rear arm 15 comprises the pivot connecting portion 15p, a hollow portion 15c located rearward of the pivot connecting portion 15p and forward of the axle hole system or arrangement 15f, and a bridge portion 15q connecting the pivot connecting portion 15p with the hollow portion 15c.

The hollow portion 15c is box-shaped. That is, the hollow portion 15c has a closed cross-section. In the present implementation, a cross section perpendicular to the forward/rearward direction of the hollow portion 15c, a cross section perpendicular to the left/right direction, and a cross section perpendicular to the up/down direction are closed. The hollow portion 15c will be described in detail further below.

A suspension hole 15b is formed in the bridge portion 15q to extend through the up/down direction. The suspension hole 15b is located rearward of the pivot shaft hole system 15a. The rear suspension 44 is inserted into the suspension hole 15b. An opening 33d of the suspension hole 15b for the lower side is provided in a wall defining the bridge portion 15q from below, while an opening 33u of the suspension hole 15b for the upper side is provided in a wall defining the bridge portion 15q from above.

The suspension hole 15b is positioned generally in the central portion of the front portion 15F of the rear arm 15 as measured in the left/right direction, i.e. in the central portion in the left/right direction. In the implementation shown in FIG. 2, the suspension hole 15b is positioned to overlap, as measured in the left/right direction, a center plane C1 that is a vertical plane located in the center of the pivot shaft hole system 15a as measured in the left/right direction thereof. The center plane C1 is a virtual vertical plane extending in the forward/rearward direction and located in the center of the pivot shaft hole system 15a in the left/right direction thereof.

The rear portion 15B is formed by a pair of arms extending rearward from the left and right ends of the box portion 15c. The axle hole system 15f is formed in the rear end of the rear portion 15B.

The rear arm 15 is formed by joining a right arm 3 and a left arm 2. The right and left arms 3 and 2 are joined by fastening members 5a, 5b and 5i (hereinafter also generally referred to as fastening members 5 when no distinction is made). The right and left arms 3,2 are in contact with each other at matching planes 32f, 32d and 32u (hereinafter also generally referred to as matching planes 32 when no distinction is made).

The right arm 3 comprises a front right portion 3F and a rear right portion 3B. The front right portion 3F and rear right portion 3B are integrally formed by die casting.

The front right portion 3F comprises a right pivot shaft hole 3a forming the right portion of the pivot shaft hole system 15a. The front right portion 3F comprises a front right wall 3b forming the right portion of the hollow portion 15c. The front right wall 3b creates a first space S1 with a left side thereof opened. In other words, the front right wall 3b defines the first space S2 from the front and rear, from the right and from above and below. The front right wall 3b may include a partial opening or notch. That is, the hollow portion 15c may not be a completely closed space.

The rear right portion 3B extends rearward from the front right portion 3F (i.e. front right wall 3b). The rear right portion 3B comprises a right axle hole 3f forming the right portion of the axle hole system 15f. The rear right portion 3B comprises a rear right wall 3c defining a space with a left side thereof opened.

The left arm 2 comprises a front left portion 2F and a rear left portion 2B. The front left portion 2F and rear left portion 2B are integrally formed by die casting.

The front left portion 2F comprises a left pivot shaft hole 2a forming the left portion of the pivot shaft hole system 15a. The front left portion 2F comprises a front left wall 2b forming the left portion of the hollow portion 15c. The front left wall 2b creates a second space S2 with a right side thereof opened. In other words, the front left wall 2b defines the second space S2 from the front and rear, from the left and from above and below. The front left wall 2b may include a partial opening or notch.

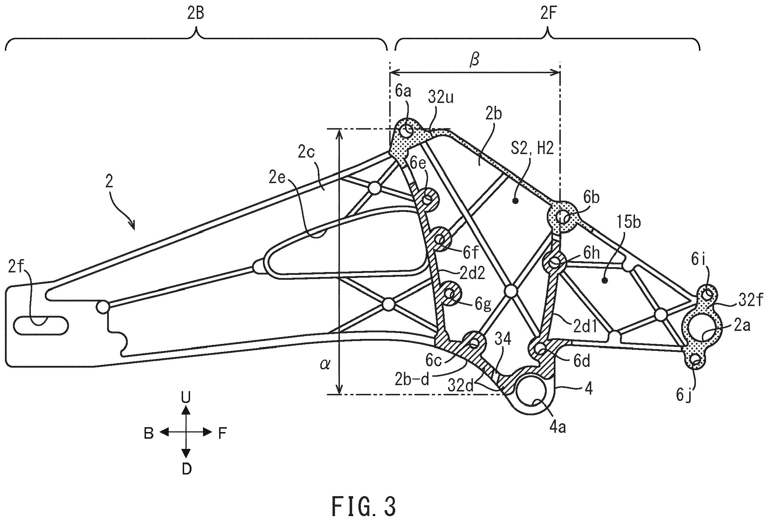

The rear left portion 2B extends rearward from the front left portion 2F (i.e. front left wall 2b). The rear left portion 2B comprises a left axle hole 2f forming the left portion of the axle hole system 15f. The rear left portion 2B comprises a rear left wall 2c defining a space with a right side thereof opened. The chain hole 2e (see FIG. 3) through which the chain 20 is to be passed is provided in the central portion of the rear left wall 2c in the up/down direction.

The left axle hole 2f in the rear left wall 2c and the right axle hole 3f in the rear right portion 3B are positioned to overlap as viewed in the left/right direction (i.e. in side view). The left axle hole 2f and right axle hole 3f form the axle hole system 15f. The rear left portion 2B and the rear right portion 3B are not in contact with each other. That is, a space where the rear wheel 14 is to be positioned is provided between the rear left portion 2B and rear right portion 3B.

The right and left arms 3 and 2 are joined in such a manner that the right and left pivot shaft holes 3a and 2a are coaxial. The right and left pivot shaft holes 3a and 2a are arranged in a continuous manner in the left/right direction. The right and left pivot shaft holes 3a and 2a form the pivot shaft hole system 15a. The right and left arms 3 and 2 are joined such that the opening on the left side of the first space S1 formed by the front right wall 3b faces the opening on the right side of the second space S2 formed by the front left wall 2b. The front right wall 3b and front left wall 2b form the hollow portion 15c in the front portion 15F of the rear arm 15.

The matching plane 32f at which the left end of the right pivot shaft hole 3a contacts the right end of the left pivot shaft hole 2a, as well as the matching plane 32u on the upper side of the rear arm 15 are positioned generally in the center as measured in the left/right direction. The matching plane 32d at the lower side of the rear arm 15, i.e. the matching plane 32d extending rearward from the lower opening 33d of the suspension hole 15b is positioned to not overlap the matching planes 32f and 32u as measured in the left/right direction. In this implementation, the matching plane 32d is offset toward the right from the matching planes 32f and 32u located in the central portion as measured in the left/right direction.

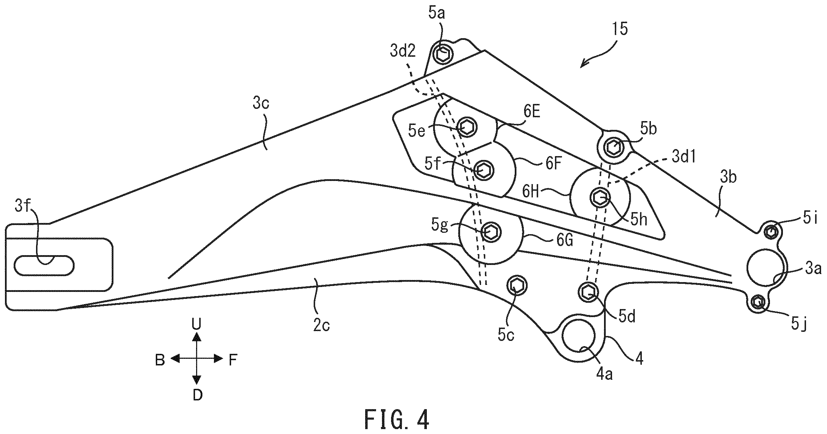

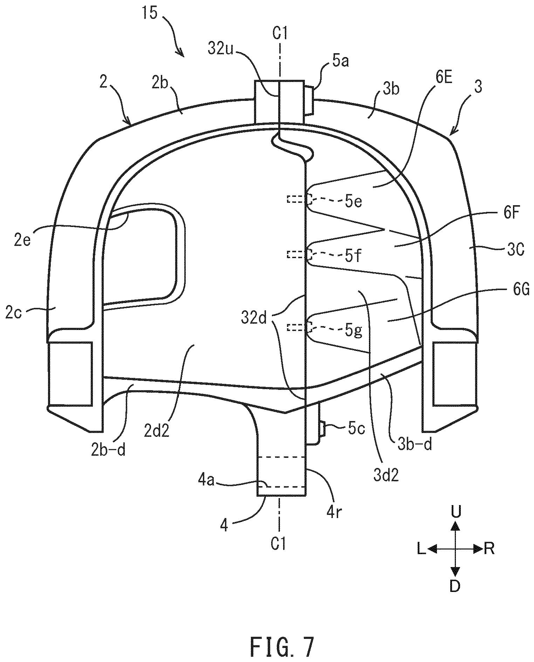

To the left of the matching plane 32d is provided a support boss 4 (not shown in FIG. 2; but see FIGS. 4 and 7) for supporting one end of the rear suspension. The support boss 4 is located in the center plane C1. In the implementation shown in FIG. 2, the support boss 4 is located rearward of the lower opening 33d of the suspension hole 15b in the front left portion 2F (see FIG. 4). The support boss 4 will be described in detail further below. The rear suspension 44 extends through the suspension hole 15b and is supported by the support boss 4.

FIG. 3 is a right side view of the left arm 2 of FIG. 2. FIG. 3 shows an example construction of the left arm 2 as viewed from the right (i.e. as viewed in the direction of arrow G of FIG. 2). In FIG. 3, arrow F indicates the forward direction, arrow B the rearward direction, arrow U the upward direction, and arrow D the downward direction. In FIG. 3, the matching plane at which the left arm 2 contacts the right arm 3 is hatched with oblique lines or dotted. It should be noted that the hatching in FIG. 3 does not indicate a cross-section of the interior of the left arm 2.

As discussed above, the front left portion 2F comprises a second space S2 with a right side thereof opened. That is, the front left wall 2b forms a recessed body recessed toward the left. This forms a second space S2 with a right side thereof opened. The front left wall 2b comprises left interior wall portions 2d1 and 2d2 defining the second space S2 from the front and rear. The left interior wall portions 2d1 and 2d2 extend toward the right from the inner surface (i.e. right side) of the front left wall 2b defining the second space S2 from the left. The left interior wall portions 2d1 and 2d2 form parts of the front left wall 2b.

In the implementation shown in FIG. 3, the left interior wall portions 2d1 and 2d2 are arranged in the front/rear direction. The front left interior wall portion 2d1 (hereinafter referred to as first left interior wall portion 2d1) extends from the rear edge of the upper opening of the suspension hole 15b in the rear arm 15 to the rear edge of the lower opening of the suspension hole 15b in the rear arm 15. The first left interior wall portion 2d1 defines the second space S2 from the front. That is, the first left interior wall 2d1 defines a front boundary of the second space S2. The rear left interior wall portion 2d2 (hereinafter referred to as second left interior wall portion 2d2) extends upward and rearward from a lower wall 2b-d of the front left wall 2b to reach the upper wall of the front left wall 2b. The lower wall 2b-d is a portion of the front left wall 2b. The lower wall 2b-d defines the second space S2 from below. That is, the lower wall 2b-d defines a lower boundary of the second space S2. The upper wall is a portion of the front left wall 2b that defines the second space S2 from above. That is, the upper wall defines an upper boundary of the second space S2. The second left interior wall portion 2d2 defines the second space S2 from the rear. That is, the second left interior wall 2d2 defines a rear boundary of the second space S2.

As shown in FIG. 2, the first space S1 provided by the front right wall 3b of the right arm 3 corresponds in position to the second space S1 provided by the front left wall 2b of the left arm 2 (i.e. overlaps such in side view). The first and second spaces S1 and S2 form a hollow space H2. Although not shown in FIG. 3, the front right wall 3b comprises right interior wall portions 3d1 and 3d2 (see FIG. 4) defining the first space S1 from the front and the rear. The right interior wall portions 3d1 and 3d2 correspond in position to the left interior wall portions 2d1 and 2d2. The right interior wall portions 3d1 and 3d2 extend toward the left from the inner surface (i.e. left side) of the front right wall 2b defining the first space S1 from the right. The right interior wall portions 3d1 and 3d2 form parts of the front right wall 3b.

For example, the first right interior wall portion 3d1 is positioned to face the first left interior wall portion 2d1 shown in FIG. 3 such that they are arranged in the left/right direction (i.e. overlap each other in side view). The first right interior wall portion 3d1 defines the first space S1 of the front right portion 3F from the front. That is, the first right interior wall 3d1 defines a front boundary of the first space S1. The second right interior wall portion 3d2 is positioned to face the second left interior wall portion 2d2 such that they are arranged in the left/right direction (i.e. overlap each other in side view). The second right interior wall portion 3d2 defines the first space S1 of the front right portion 3F from the rear. That is, the second right interior wall 3d1 defines a rear boundary of the first space S1. When the left and right arms 2 and 3 are joined, the right edge of the first left interior wall portion 2d1 is in contact with the left edge of the first right interior wall portion 3d1 (i.e. they are butted), and the right edge of the second left interior wall 2d2 is in contact with the left edge of the second right interior wall 3d2 (i.e. they are butted). That is, the hatched or dotted portions of the left interior wall portions 2d1 and 2d2 in FIG. 3 are in contact with the right interior wall portions 3d1 and 3d2.

Further, the suspension hole 15b discussed above is provided between the pivot shaft hole system 15a and a first interior wall portion which comprises the first left interior wall portion 2d1 and the first right interior wall portion 3d1 in contact therewith. A hollow space H2 is formed between the first left interior wall portion 2d1 and first right interior wall portion 3d1 on one hand and the second left interior wall portion 2d2 and the second right interior wall portion 3d2 in contact therewith on the other. The hollow space H2 is defined, from the front and rear, by the right interior wall portions 3d1 and 3d2 and left interior wall portions 2d1 and 2d2. The hollow space H2 is defined, from above and below and from the left and right, by the front right wall 3b and front left wall 2b.

The pivot shaft hole system 15a and support boss 4 are located in the front portion 15F of the rear arm 15 formed by the front left portion 2F and front right portion 3F. A strong twisting force may be applied to the pivot shaft hole system 15a and support boss 4. Thus, the front portion 15a of the rear arm 15 is required to have high torsional stiffness. The front portion 15F of the rear arm 15 comprises a hollow space 15c which has a dimension in the up/down direction, *α*, that is larger than its dimension in the front/rear direction, *β*. This provides the torsional stiffness required of the front portion 15a of the rear arm 15. Further, since the hollow portion 15c is hollow in structure, a light-weight rear arm can be constructed while ensuring high torsional stiffness.

### Construction of Support Boss

As shown in FIG. 3, the support boss 4 is provided on the lower side of the left arm 2. The support boss 4 is formed integrally with the front left wall 2b. The support boss 4 is formed by a portion of the lower wall 2b-d of the front left wall 2b of the left arm 2. The portion has a larger wall thickness than other portions. The support boss 4 comprises a support shaft hole 4a into which a support shaft is to be inserted. The support shaft swingably supports one end 44a of the rear suspension 44 (see FIG. 5). The shaft center of the support shaft hole 4a extends in the left/right direction. The shaft center of the support shaft hole 4a is parallel to the shaft center of the left pivot shaft hole 2a. The rear suspension 44 or a link connected to the rear suspension 44 is attached to the support boss 4, where the support shaft which extends through the support shaft hole 4a is provided therebetween. Thus, the rear suspension 44 or link is supported by the rear arm 15 such that it can swing about the support shaft.

The support boss 4 is only provided on the left arm 2, while no support boss is provided on the right arm 2. That is, the support shaft hole 4a of the support boss 4 is provided on a portion of the lower wall 2b-d of the front left wall 2b that has a larger wall thickness, while no support shaft hole 4a is provided on the lower wall of the front right wall 3b which is in contact with the lower wall 2b-d of the front left wall 2b. As the support boss 4 is only provided on one of the left and right arms 2 and 3, the support boss 4 is not divided into left and right portions. This ensures sufficient stiffness of the support boss 4 and, as a result, ensures sufficient stiffness of the rear arm 15. Further, it is easier to ensure sufficient strength of the support boss 4.

The support boss 4 is positioned to overlap the first left interior wall portion 2d1 as measured in the front/rear direction. That is, the support boss 4 is positioned to cross a virtual extension plane of the first left interior wall portion 2d1 extended downward. In the present implementation, the support shaft hole 4a of the support boss 4 is positioned to cross the virtual extension plane. Further, at least a portion of the support shaft hole 4a of the support boss 4 is located to overlap the space between the first left interior wall portion 2d1 and second left interior wall portion 2d2 as measured in the front/rear direction. This construction increases the strength of the support boss 4 by means of the first left interior wall portion 2d1 and second left interior wall portion 2d2 and the first right wall portion and second right wall portion which are in contact therewith. Further, the stiffness of the front portion 15F of the rear arm 15 against a twisting force that has been transmitted via the support boss 4 is increased by the first left interior wall portion 2d1 and second left interior wall portion 2d2 and the first right wall portion 3d1 and second right wall portion 3d2 which are in contact therewith.

The right side 4r of the support boss 4 (see FIG. 7) is flush with the matching plane 32d portion for the lower wall 2b-d of the front left wall 2b and the lower wall of the front right wall and a part of the matching plane 32d portion for the left interior wall portions 2d1 and 2d2 and the right interior wall portion. On the other hand, the matching plane 32u at the upper wall of the front left wall 2b and the matching plane 32f around the left pivot shaft hole 2a (i.e. dotted portions in FIG. 3) are displaced from the matching plane 32d (i.e. hatched portions with oblique lines in FIG. 3) in the left/right direction (also see FIG. 7). The matching plane 32d is offset toward the right from the matching planes 32u and 32f. That is, parts of the support boss 4, lower wall 2b-d and left interior wall portions 2d1 and 2d2 protrude toward the right relative to the other portions of the left arm 2. This makes it possible to position the support boss 4 only on the left arm 2 and still on the central portion of the rear arm 15 as measured in the left/right direction. Further, as the right side 4r of the support boss 4 is flush with the right sides of the left interior wall portions 2d1 and 2d2, i.e. the matching plane 32d, reinforcement of the support boss 4 by the left interior wall portions 2d1 and 2d2 is further increased.

### Arrangement of Fastening Members

As shown in FIG. 3, fastening holes 6a to 6j into which the fastening or connection members for fastening the left and right arms 2 and 3 are inserted are provided at the matching planes 32u, 32f and 32d. In this implementation, the fastening holes 6b and 6d are located at positions associated with the upper and lower edges, respectively, of the left interior wall portion 2d1. The fastening holes 6a and 6c are located at positions associated with the upper and lower edges, respectively, of the left interior wall portion 2d2. Fastening members that are to pass through the right arm 2 are inserted into these fastening holes 6a, 6c, 6b and 6d. In view of this, the fastening members should be located at positions associated with the upper and lower edges of the left interior wall portions 2d1 and 2d2 (and right interior wall portions 3d1 and 3d2). The fastening members inserted into these fastening holes 6a, 6c, 6b and 6d improve the strength and stiffness of the left interior wall portions 2d1 and 2d2 and the right interior wall portions 3d1 and 3d2.

Fastening holes 6e, 6f and 6g are provided in the matching plane 32d for the second left interior wall portion 2d2 and the second right interior wall portion 3d2. A fastening hole 6h is provided in the matching plane 32d for the first left interior wall portion 2d1 and the first right interior wall portion 3d1. Fastening members that are to pass through the right arm 2 are inserted into these fastening holes 6e, 6f, 6g and 6h. As a result, the fastening members for fastening the left interior wall portions 2d1 and 2d2 and the right interior wall portions are provided in the matching plane 32d for the left interior wall portions 2d1 and 2d2 and the right interior wall portions. This improves torsional stiffness efficiently.

If the right and left arms are joined by welding, an area of the front portion that is as large as possible is welded in order to provide high stiffness. If the right and left arms 3 and 2 are joined using fastening members, as in the present embodiment, stiffness can be improved by providing a number of fastening members that is as large as possible. However, too many fastening portions mean increased manufacturing costs and impaired appearance. In order to satisfy the stiffness requirements with a number of fastening points that is as small as possible, a plurality of fastening members may be arranged in the up/down direction along the left interior wall portions 2d1 and 2d2 and the right interior wall portions, as discussed above. More specifically, fastening members at positions associated with the upper and lower edges of the left interior wall portions 2d1 and 2d2 (and the right interior wall portions) and fastening members provided between these fastening members effectively improve torsional stiffness.

In the implementation shown in FIG. 3, a plurality of fastening holes 6e, 6f and 6g are arranged along the second left interior wall portion 2d2. As the fastening members are arranged in the vertical direction, a small number of fastening points provide the appropriate torsional stiffness. Further, in the implementation shown in FIG. 3, the plane in which the fastening holes 6e, 6f and 6g are provided and the matching plane 32d for the second left interior wall portion 2d2 are arranged in a continuous manner. This further increases the improvement in stiffness.

FIG. 4 is a right side view of the rear arm 15 of FIG. 2. FIG. 4 shows the right arm 3 joined to the left arm 2 of FIG. 3. The left and right arms 2 and 3 are joined with a plurality of fastening members 5a to 5j. The fastening members 5a to 5j may be screws or bolts, for example. The fastening members 5a to 5j are inserted into the fastening holes provided in the right arm 3 and the corresponding fastening holes 6a to 6j in the left arm 2 with their axis in the left/right direction.

In FIG. 4, the right interior wall portions 3d1 and 3d2 of the right arm 3 are suggested by broken lines. The right interior wall portions 3d1 and 3d2 extend toward the left from the inner surface (i.e. left side) of the front right wall 3b. The first right interior wall portion 3d1 is positioned to face the first left interior wall portion 2d1 (see FIG. 3), such that they are arranged in the left/right direction. The second right interior wall portion 3d2 is positioned to face the second left interior wall portion 2d2 such that they are arranged in the left/right direction.

The fastening member 5b is located at a position associated with the upper edge of the first right interior wall portion 3d1, and the fastening member 5d is located at a position associated with the lower edge of the first right interior wall portion 3d1. The fastening members 5a and 5c are located at positions associated with the upper and lower edges, respectively, of the second right interior wall portion 3d2. The fastening members 5e, 5f and 5g fasten the second right interior wall portion 3d2 to the second left interior wall portion 2d2 in the plane in which the second right interior wall portion 3d2 contacts the second left interior wall portion 2d2. The fastening members 5e, 5f and 5g are arranged along the second right interior wall portion 3d2. The fastening member 5h fastens the first right interior wall portion 3d1 to the first left interior wall portion 2d1 in the plane in which the first right interior wall portion 3d1 contacts the first left interior wall portion 2d1.

The portions of the front right wall 3b where the fastening members 5e, 5f, 5g and 5h are located form recesses 6E, 6F, 6G and 6H recessed toward the left. That is, the recesses 6E, 6F, 6G and 6H are provided in a side wall portion of the front right wall 3b. The front right wall 3b comprises a side wall portion defining the hollow portion 15 of the rear arm 15 from a side (i.e. right side). In other words, the side wall portion of the front right wall 3b defines a right boundary of the hollow portion 15. The recesses 6E, 6F, 6G and 6H are shaped such that their opening area decreases as it goes toward the depth. As the recesses 6E, 6F, 6G and 6H are thus shaped, die cutting during die casting of the right arm 2 is straightforward. The bottoms of the recesses 6E, 6F, 6G and 6H provide fastening seats for the fastening members 5a, 5f, 5g and 5h. The bottoms of the recesses 6E, 6F, 6G and 6H have holes into which the fastening members 5a, 5f, 5g and 5h are to be inserted. As such recesses 6E, 6F, 6G and 6H are provided, the length of the fastening members 5a, 5f, 5g and 5h in the side wall portion of the front right wall 3b as measured in the left/right direction is smaller by the depth of the recesses 6E, 6F, 6G and 6H.

As shown in FIG. 4, the front right wall 3b is not present in a position that overlaps, as viewed from the right, the support shaft hole 4a of the support boss 4 of the left arm 2. That is, no support boss 4 is provided on the right arm 3. In the present embodiment, the recesses 6E, 6F, 6G and 6H are provided on the one of the right and left arms 3 and 2 that has no support boss 4. Further, the recesses 6E, 6F, 6G and 6H are positioned to fasten the components in the matching plane 32d which is offset toward the right, i.e. the right arm which has not support boss 4. The depth of the recesses 6E, 6F, 6G and 6H is smaller by the amount of offset toward the right. This reduces the size of the openings of the recesses 6E, 6F, 6G and 6H in side view. This reduces the degree to which the appearance of the rear arm is impaired by the openings of the recesses.

### Arrangement of Rear Suspension

FIG. 5 illustrates an arrangement of the rear suspension attached to the rear arm 15 of FIG. 4. In the implementation of FIG. 5, one end 44a of the rear suspension 44 is coupled to the support boss 4, where the links 43 and 42 are provided therebetween. The other end 44b of the rear suspension 44 is rotatably coupled to the vehicle body frame (not shown). The link 43 is rotatably coupled to the vehicle body frame (not shown) and the link 42. The link 42 is rotatably coupled to the link 43 and the support shaft of the support boss 4. The support shaft is inserted into the support shaft hole 4a of the support boss 4.

It should be understood that the present embodiment is not limited to the link arrangement of FIG. 5; as shown, a link arrangement may use a link 46 rotatably coupled to the vehicle body frame and a link 45 to which the link 46, the support shaft of the support boss 4 and one end 44a of the rear suspension 44 are rotatably coupled.

It should be understood that the support boss 4 is not limited to an arrangement using a link to support one end of the suspension. One end of the suspension may be swingably attached to the support boss 4. Further, the suspension is not limited to an arrangement in which it is connected between the vehicle body frame and rear arm.

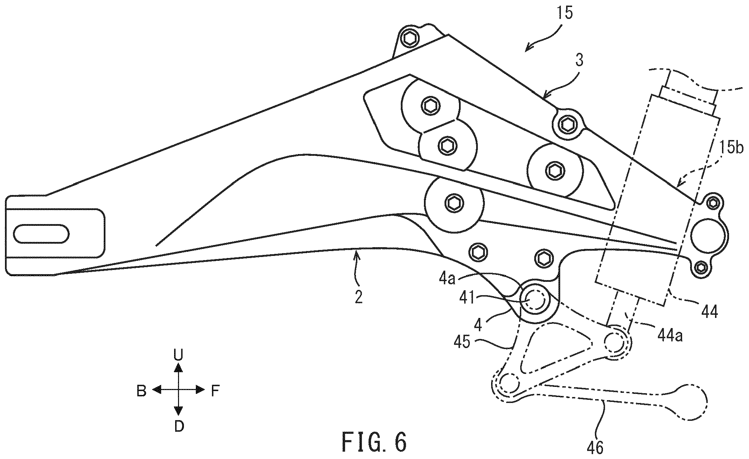

In each of the implementations shown in FIGS. 5 and 6, the support boss 4 is located below the left arm 2. Consequently, the suspension is supported below the rear arm 15. Alternatively, for example, the support boss 4 may be provided on a wall portion of the front left wall 2b that defines the second space S2 from above or a wall portion that defines the second space from the front. In such implementations, the suspension is supported above or forward of the rear arm 15.

### Arrangement of Support Boss and Matching Planes

FIG. 7 is a rear view of the rear arm 15 of FIG. 2. FIG. 7 shows the rear arm 15 of FIG. 2 as viewed from the rear (i.e. in the direction of arrow K). As shown in FIG. 7, the support boss 4 is located on the central portion of the rear arm 15 as measured in the left/right direction.

The support boss 4 is provided on the left arm 2. More specifically, the support boss 4 is formed integrally with the other portions of the left arm 2 including the front left wall 2b, rear left wall 2c and left interior wall portion 2d2. In this implementation, the portion of the lower wall 2b-d of the front left wall 2b that protrudes downward forms the support boss 4. Thus, the support boss 4 has no matching plane at which the left and right arms 2 and 3 would contact each other. Since the support boss 4 has no matching plane that could be disadvantageous in terms of strength, it will be relatively easy to ensure sufficient strength of the support boss 4. Further, it will be possible to ensure sufficient stiffness of the support boss 4 and, as a result, to ensure sufficient stiffness of the rear arm 15.

Since the support boss 4 is not divided into left and right portions, no machining is necessary for aligning the axes of the left and right portions of the support shaft holes 4a after the left and right arms 2 and 3 have been joined. Further, the precision in the positions of the pivot shaft and the support shaft of the suspension can be controlled by adjusting the positions of the left pivot shaft hole 2a and support shaft hole 4a of the left arm 2. Thus, management of one component (i.e. left arm 2 in the present implementation) controls the precision in the positions of the above components. This makes it easier to control the precision in the positions of the pivot shaft and support shaft relative to each other during the manufacturing process.

The matching plane 32d, which is one of the planes at which the right arm 3 contacts the left arm 2, is flush with the right side 4r of the support boss 4. More specifically, the matching plane 32d portion for the lower wall 2b-d of the front left wall 2b on which the support boss 4 is provided and the lower wall 3b-d of the front right wall 3b, as well as the matching plane 32d portion for the second left interior wall portion 2d2 and second right interior wall portion 3d2 are displaced from the center plane C1 as measured in the left/right direction toward the right, i.e. toward the right arm 3 which has no support boss 4. Thus, the matching plane near which the support boss 4 is provided is offset from the center as measured in the left/right direction. This makes it possible to provide the support boss 4 only on one of the left and right arms 2 and 3 and still position such near the central portion as measured in the left/right direction. This makes it possible to support the rear suspension near the central portion as measured in the left/right direction.

In the implementation shown in FIG. 7, the matching plane 32d for the second left interior wall portion 2d2 and the second right interior wall portion 3d2 is offset toward the right from the center plane C1 as measured in the left/right direction. The fastening members 5e, 5f and 5g for fastening the second left interior wall portion 2d2 and the second right interior wall portion 3d2 are inserted from the right. Accordingly, the front right wall 3b comprises recesses 6E, 6F and 6G whose right sides are opened and that reach the matching plane 32d. The fastening members 5e, 5f and 5g are positioned in the recesses 6E, 6F and 6G. As the matching plane 32d is offset toward the right, the depth of the recesses 6E, 6F and 6G, i.e. the length thereof in the left/right direction, is reduced. This also reduces the area occupied by the recesses 6E, 6F and 6G in a plane perpendicular to the left/right direction. Thus, in the present implementation, the matching plane 32d is offset toward the side without a support boss 4 (i.e. toward the right in the present implementation), and the fastening members 5e, 5f and 5g for joining the surfaces in the matching plane 32d are inserted from the side without a support boss 4. This reduces the depth and opening size of the recesses 6E, 6F and 6G for the fastening members 5e, 5f and 5g.

In the implementation shown in FIG. 7, a lower portion of the matching plane 32d for the second left interior wall portion 2d2 and second right interior wall portion 3d2 is flush with the right side 4r of the support boss 4. On the other hand, the matching plane 32u for the upper wall of the front left wall 2b and the upper wall of the front right wall 3b is located in the central portion as measured in the left/right direction. Although not shown in FIG. 7, the matching plane 32f around the left pivot shaft hole 2a shown in FIG. 3 is located in the central portion as measured in the left/right direction. Thus, the matching planes may include planes located in the central portion as measured in the left/right direction (32u and 32f) and a plane displaced toward the side without a support boss 4 from a plane located in the central portion as measured in the left/right direction (32d). Thus, the weights and volumes of the left and right arms 3 and 2 can be balanced more correctly. Further, the following advantages in the manufacturing process can be provided.

During die casting of the left and right arms 2 and 3, the direction of die cutting is the left/right direction of the rear arm. During the casting process, it is not preferable if the dimensions of the left and right arms being cast measured in the direction of die cutting, i.e. left/right direction, are too large. To reduce the dimensions in the left/right direction, some of the matching planes may be located in the central portion as measured in the left/right direction, as discussed above. This construction reduces the portion of the right arm 3 whose dimension in the left/right direction is relatively large compared with implementations where all the matching planes are flush with the right side 4r of the support boss 4.

It should be understood that the manner in which the support boss 4 is positioned in the central portion as measured in the left/right direction is not limited to part of the support boss 4 overlying, as measured in the left/right direction, the center plane C1 of the rear arm 15. For example, if the support boss 4 is displaced from the center plane C1 as measured in the left/right direction, the support boss 4 is considered to be located in the central portion as measured in the left/right direction if the support boss is located to overlap the suspension hole 15b as measured in the left/right direction. That is, if the support boss 4 is positioned to be capable of supporting the rear suspension extending through the suspension hole 15b, the support boss 4 is considered to be located in the central portion as measured in the left/right direction.

Further, the manner in which the matching planes 32u and 32f are positioned in the central portion as measured in the left/right direction is not limited to the matching planes 32u and 32f being exactly consistent with the center plane C1 as measured in the left/right direction. For example, even if the matching planes 32u and 32f are displaced from the center plane C1, they are considered to be located in the central portion as measured in the left/right direction if they are located to overlap the suspension hole 15b as measured in the left/right direction.

### Construction of Drain Hole

Referring to FIG. 3, the lower wall 2b-d of the front left wall 2b has a groove 34 located on the surface facing the front right wall 3b to extend in the thickness direction of the lower wall 2b-d from the interior to the exterior. The groove 34 is a notch on the surface in the matching plane for the front right wall 3b of the lower wall 2b-d of the front left wall 2b. The groove 34 may be formed by casting the left arm 2 using a mold having a protrusion corresponding to the groove 34. Alternatively, the groove 34 may be formed by casting the left arm 2 and then grinding a portion of the lower wall 2b-d.

As the groove 34 is provided, a hole is provided connecting the hollow space H2 formed by joining the right and left arms 3 and 2 to the outside. Thus, liquid that may be present in the hollow space H2 may be discharged through the hole toward the outside. Further, the above construction allows such a hole for discharging liquid to be formed easily. For example, if the right and left arms 3 and 2 are joined by welding, machining is necessary for forming a hole in the wall after the arms are joined. In contrast, in the present embodiment, the right and left arms 3 ,2 are joined by fastening members such that a drain hole can be formed easily by forming a groove 34 before the arms are joined, as described above.

The groove 34 is provided in the lower wall 2b-d located between the first left interior wall portion 2d1 and second left interior wall portion 2d2. For example, the groove 34 may be located at the lowermost position in the lower wall 2b-d between the first left interior wall portion 2d1 and second left interior wall portion 2d2. Thus, liquid can be easily discharged through the groove 34. The lowermost position in the lower wall 2b-d of the front left wall 2b may be the position that is lowermost when the vehicle to which the rear arm 15 is attached is stationary on a horizontal surface or supported by a stand.

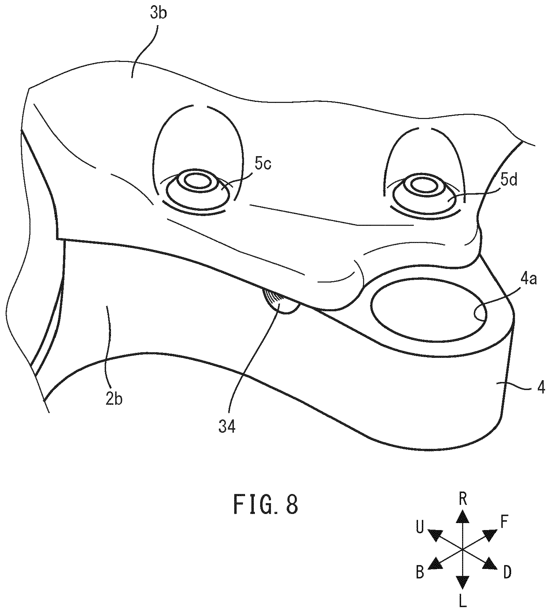

FIG. 8 illustrates a construction of components around the groove 34 as viewed from outside the rear arm 15. The groove 34 forms a hole connecting the outside of the rear arm 15 and the interior hollow space H2. It should be understood that a groove 34 may be formed in the front right wall 3b in lieu of the front left wall 2b, or may be formed in each of the front left wall 2b and front right wall 3b.

### Example of Manufacturing Process

The process for manufacturing the rear arm 15 comprises the step of forming a rear arm 3 by die casting, the step of forming a left arm 2 by die casting, and the step of joining the right and left arms 3 and 2 using fastening members 5a to 5j.

The die casting in the disclosed embodiment is high-pressure die casting, and comprises the step of pushing molten metal into a mold. The rear arm 15 may be made of a metal such as an aluminum alloy, ADC 3 (JIS H 5302:2006), or a magnesium alloy. For example, if the rear arm is made of an aluminum alloy, molten metal may be injected into a mold during die casting at a pressure of 20 MPa or higher, and melt may be injected at a rate of 5m/s or higher. As the right and left arms 3 and 2 are die-cast, the right and left arms 3 and 2 can be formed in a shorter period of time than with gravity casting or low-pressure casting.

When the right and left arms 3 and 2 are die-cast, the direction of die cutting may be the left/right direction. For example, a metal melt may be pushed into the space formed between a first mold having a shape corresponding to the right side of a left arm 2 and a second mold having a shape corresponding to the left side of a left arm 2 to die-cast a left arm 2. A right arm 3 may be cast in a similar manner. In the present embodiment, the right arm 3 is shaped such that the left side is opened, and the left arm 2 is shaped such that the right side is opened. Thus, both of them have a construction suitable for being die-cast where the direction of die cutting is the left/right direction.

The left pivot shaft hole 2a of the cast left arm 2 and the right pivot shaft hole 3a of the cast right arm 3 are machined so as to be coaxial. Further, the left pivot shaft hole 2a and support shaft hole 4a are machined so as to be in a predetermined positional relationship. Thereafter, with the left and right pivot shaft holes 2a and 3a being coaxial, the left and right arms 2 and 3 are joined by fastening members 5a to 5j.

As the left and right arms 2 and 3 are joined using fastening members 5a to 5j, deformation due to distortion of the left and right arms 2 and 3 is smaller than in implementations where they are joined by welding. Thus, after they are joined, no or little machining is needed to ensure that the left and right pivot shaft holes 2a and 3a are coaxial and that the support shaft hole 4a and the pivot shaft holes 2a and 3a are precisely positioned relative to each other.

The above manufacturing process joins the left and right arms 2 and 3 using fastening members without welding. Thus, the machining step for ensuring precision regarding the pivot shaft and support boss can be omitted or simplified. This reduces manufacturing costs. Moreover, the stiffness required of the rear arm 15 is provided as described above even though joining with fastening members is employed.

### Implementation with Inserted Collars

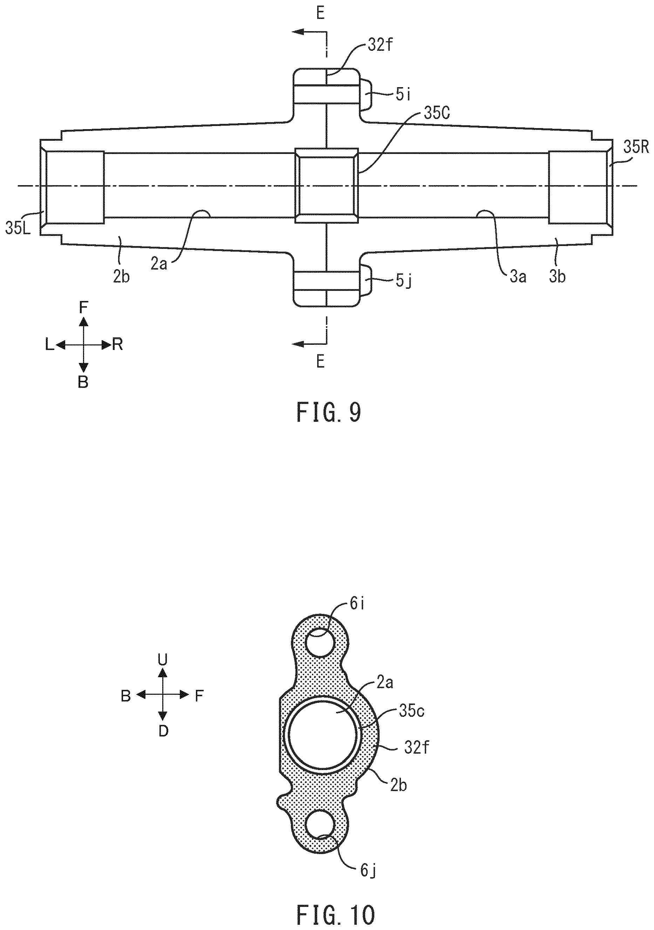

In an example variation of the manufacturing process, to ensure that the left and right pivot shaft holes 2a and 3a are coaxial, collars may be inserted into the left and right pivot shaft holes 2a and 3a before the left and right arms 2 and 3 are joined. FIG. 9 illustrates a construction of the left and right pivot shaft holes 2a and 3a into which collars have been inserted and which are joined together. FIG. 9 shows a cross-section taken on line A-A of FIG. 2. FIG. 10 shows a cross-sectional view of the components into which the collar 35C of FIG. 9 has been inserted, taken on line E-E of FIG. 9.

To provide the construction shown in FIG. 9, before the right and left arms 3 and 2 are joined, collars 35R and 35L are inserted into the right and left pivot shaft holes 3a and 2a, respectively. A collar 35R that has been machined with a desired precision is inserted into the right end of the right pivot shaft hole 3a, and a cylindrical collar 35L that has been machined with a desired precision is inserted into the left end of the left pivot shaft hole 2a. These collars 35R and 35L (hereinafter referred to as outer collars 35R and 35L) are inserted into the areas in the pivot shaft holes 2a and 3a where bearing members are to be inserted. This makes it easier to ensure that the right and left pivot shaft holes 3a and 2a are coaxial.

Further, before the arms are joined, a cylindrical collar 35C (hereinafter referred to as inner collar 35C) may be inserted into the end of the right or left pivot shaft hole 3a or 2a into which no outer collar is inserted. The inner collar 35C is inserted such that the inner collar and outer collars 35R and 35L are coaxial. The inner collar 35C is inserted such that it is not entirely in the pivot shaft hole 2a or 3a but a portion thereof protrudes from the pivot shaft hole 2a or 3a. Then, the right and left arms 3 and 2 are joined such that the inner collar 35C is located in both the left end of the right pivot shaft hole 3a and the right end of the left pivot shaft hole 2a. More specifically, after the arms are joined, the inner collar 35C is in contact with both the inner periphery of the right pivot shaft hole 3a and the inner periphery of the left pivot shaft hole 2a. Further, after the arms are joined, the outer collars 35R and 35L and inner collar 35C are coaxial. Furthermore, after the arms are joined, the right and left pivot shaft holes 3a and 2a are arranged in the left/right direction in a continuous manner. This eliminates the necessity to machine the pivot shaft holes 2a and 3a for ensuring that the relevant components are coaxial after the arms are joined. This makes it still easier to ensure that the right and left pivot shaft holes 3a and 2a are coaxial.

The arrangement of collars for ensuring that the relevant components are coaxial is not limited to the above implementation. For example, instead of the above manner, collars may be inserted into two of the fastening holes 6a to 6h. This allows the right and left pivot shaft holes to be precisely coaxial.

### Implementation with Cover

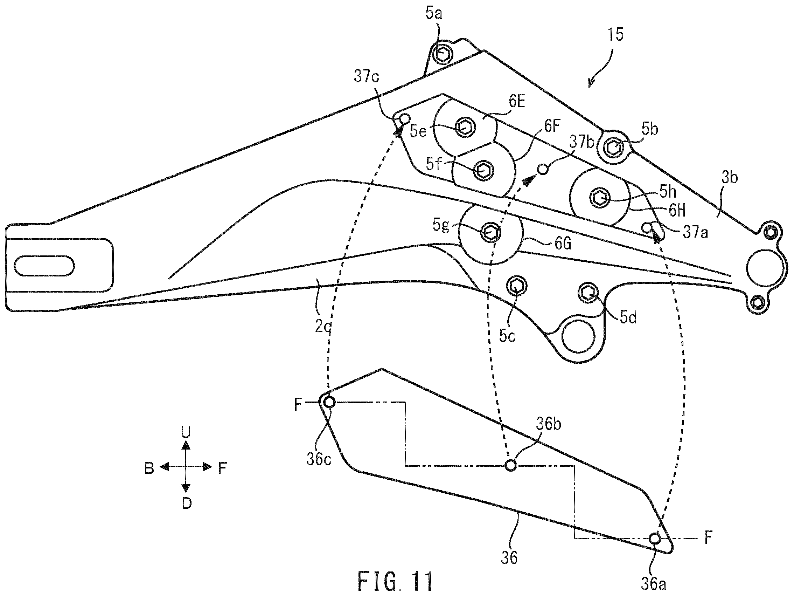

The rear arm 15 may further be provided with a cover for covering the portions of the fastening members 5a to 5j that are exposed to the outside of the rear arm 15. FIG. 11 illustrates an arrangement in which a cover is provided on the rear arm of FIG. 4. In the implementation shown in FIG. 11, a cover 36 is attached to the front right wall 3b for covering the fastening members 5e, 5f and 5h exposed at the outer surface of the front right wall 3b of the rear arm 15.

The cover 36 is attached to the arm to cover the fastening members 5e, 5f and 5h and the associated recesses 6E, 6F and 6G. The shape of the cover 36 and the area covered with the cover 36 are not limited to those shown in FIG. 11. For example, a cover may be attached to the arm to cover the recesses 6E, 6F and 6G and, in addition, the recess 6G. In implementations where fastening members are exposed at the surface of the front left wall 2b, a cover 36 may be attached to the front left wall 2b.

The front right wall 36 has holes 37a, 37b and 37c to allow the cover 36 to be attached. Hooks 36b and 36c on the cover 36 are inserted into the holes 37b and 37c. A hole 36a is positioned in the cover 36 to overlap the hole 37a as viewed in the left/right direction. The hole 37a in the front right wall 3b and the hole 36a in the cover 36 are fastened by a rivet, for example.

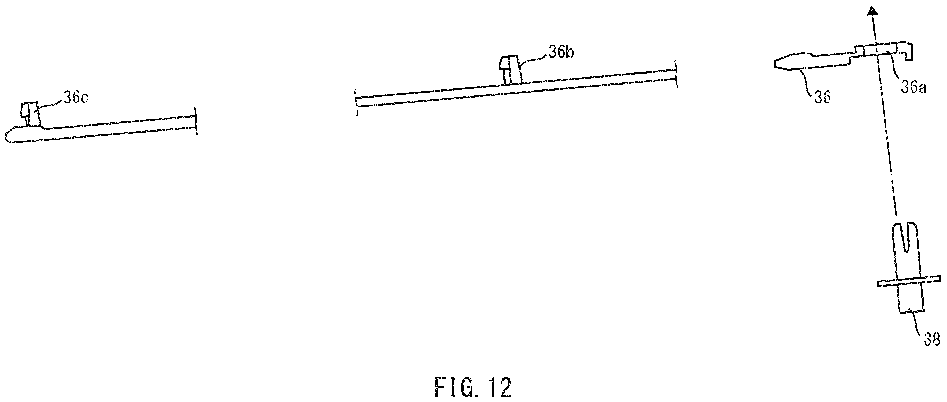

FIG. 12 shows a cross-section of the cover 36 taken on line F-F of FIG. 11. In the implementation shown in FIG. 12, the hooks 36b and 36c protrude from the surface of the cover 36 toward an object to which they are to be attached (i.e. front right wall 3b), and have hooked ends. The cover 36 and rivet 38 may be formed of resin, for example. The hooks 36b and 36c and rivet 38 secure the cover 36 to the surface of the rear arm 15. This prevents the cover 36 from being peeled off due to splashed water or prevents the fixing means from being deteriorated by heat from the muffler 23.

The cover 36 prevents the fastening members from adversely affecting the marketability in terms of appearance. For example, using a large number of fastening members to improve the strength or stiffness of the rear arm 15 may adversely affect the marketability in terms of appearance. In such cases, a cover 36 covering the exposed portions of the fastening members may be provided to keep the aesthetic of the appearance. The rivet 38 may be replaced by another fastening member (for example, bolt). The material of the cover 36 is not limited to resin.

### Effects of Embodiments

The rear arm 15 in the above embodiment is formed by joining a right arm 3 and a left arm 2. The rear arm 15 comprises a front portion 15F and a rear portion 15B. The front portion 15F comprises a pivot shaft hole system 15a into which a pivot shaft 21 is inserted and a hollow portion 15c located rearward of the pivot shaft hole system 15a. The rear portion 15B extends rearward from the front portion 15F. An axle hole system 15f into which an axle of a rear wheel is inserted is located at a rear end of the rear portion 15B.

The right arm 3 is an one piece die cast product having a front right portion 3F and a rear right portion 3B. The front right portion 3F has a right pivot shaft hole 3a forming a right portion of the pivot shaft hole system 15a. Further, the front right portion 3F has a front right wall 3b defining a first space S1 with its left side opened and forming a right portion of the hollow portion 15c. The rear right portion 3B extends rearward from the front right portion 3F and has a right axle hole 3f forming a right portion of the axle hole system 15f.

The left arm 2 is an one piece die cast product having a front left portion 2F and a rear left portion 2B. The front left portion 2F has a left pivot shaft hole 2a forming a left portion of the pivot shaft hole system 15a. Further, the front left portion 2F has a front left wall 2b defining a second space S2 with its right side opened and forming a left portion of the hollow portion 15c. The rear left portion 2B extends rearward from the front left portion 2F and has a left axle hole 2f forming a left portion of the axle hole system 15f.

The front right portion 3F of the right arm 3 and the front left portion 2F of the left arm 2 are joined by a fastening member 5. A support boss 4 for supporting one end of a rear suspension 44 is integrally formed on only one of the right arm 3 and the left arm 2.

In the above first arrangement, the right arm 3 has a front right portion 3b having a first space S1 with a left side thereof opened, and thus has a shape suitable for being die-cast using a mold having a die-cutting direction in the left/right direction. Similarly, the left arm 2 has a front left portion 2b having a second space S2 with a right side thereof opened, and thus has a shape suitable for being die-cast. When the right and left arms 3 and 2 are fastened together by fastening members 5, the opening on the left side of the first space S1 in the front right portion 3F faces the opening on the right side of the second space S2 in the front left portion 2F. Thus, the rear arm 15 has a hollow portion 15c located in the front portion 15F in which the pivot shaft is located. This increases the stiffness of the front portion 15F in which the pivot shaft is provided to which a relatively large force is applied, and at the same time reduces the increase in weight. Further, the support boss 4 is located on the right or left arm 3 or 2. Thus, the support boss 4 does not include a portion at which the right and left arms 3 and 2 are joined, i.e. a matching plane. This ensures sufficient stiffness of the front portion 15F including the support boss 4, to which a relatively large force is applied.

This makes it possible to use fastening members 5 to join the right and left arms 3 and 2 to form a rear arm 15 and, at the same time, to provide the stiffness required of the rear arm 15. That is, the required stiffness can be provided without joining the right and left arms by welding. Thus, distortion created by welding does not occur. This makes it easy to control the precision in the positions of the pivot shaft 21 and support boss 4. For example, if the precision in the positions of the right pivot shaft hole 3a and left pivot shaft hole 2a and the precision in the position of the support boss 4 are provided before the arms are joined, no or little additional machining is needed to provide the precision in the positions of these members after the arms are joined.

The support boss 4 may be located in a central portion of the rear arm 15 as measured in a left/right direction. Thus, the rear suspension 44 is supported near the center of the rear arm 15 as measured in the left/right direction. This makes it easier to reduce the size of the rear arm 15 as measured in the left/right direction than implementations where the rear suspension 44 is supported at a position biased toward the left or right relative to the rear arm 15. This makes it easy to position the rear arm in the straddled vehicle efficiently taking the positional relationship thereof and other parts such as muffler or chain into consideration.

At least one of matching planes 32f, 32d, 32u at which the front right wall 3b of the right arm 3 and the front left wall 2b of the left arm 2 contact each other may be displaced, from a center plane C1 including a center of the pivot shaft hole system 15a as measured in the left/right direction, toward one of the right and left arms 3 and 2 where the support boss 4 is not located. This makes it easy to position the support boss 4 in the central portion of the rear arm 15 as measured in the left/right direction while providing it on one of the right and left arms 3 and 2.

The matching planes 32f, 32d, 32u may include a plane 32f, 32u located in the central portion as measured in the left/right direction and a plane 32d displaced, from the plane 32f, 32u located in the central portion as measured in the left/right direction, toward the one of the right and left arms 3 and 2 where the support boss 4 is not located. In the areas where the matching planes are located in the central portion as measured in the left/right direction, the difference between the size of the right arm 3 as measured in the left/right direction and the size of the left arm 2 as measured in the left/right direction is small. This prevents the size of one of the right and left arms 3 and 2 as measured in the left/right direction from becoming extremely large compared with the size of the other arm. This makes it easy to perform die cutting during die casting of the right or left arm 3 or 2.

One of the front right wall 3b and the front left 2b wall may have a side wall portion defining the hollow portion 15c from a side. In this case, the side wall portion may have a recess 6E-6H extending from the side wall portion toward the other one of the front right wall 3b and the front left wall 2b and having a bottom forming a fastening seat for fastening by the fastening member 5. Thus, the bottom of the recess recessed from one of the side wall portions of the front right wall 3b and the front left wall 2b toward the other one forms a fastening seat for the fastening member 5. This reduces the length of the fastening members on the side wall portions compared with implementations where no recess is provided.

The recess 6E-6H may be located on one of the right and left arms 2 and 3 where the support boss 4 is not located. This reduces the size of the recess as measured in the depth direction compared with implementations where a recess is provided on the arm where the support boss 4 is located. Thus, the recess only need have a small opening.

Beneficially the support boss 4 may be located on one of a lower wall defining the first space S1 of the front right portion 3F from below and a lower wall defining the second space S2 of the front left portion 2F from below. Thus, the lower surface of the rear arm 15 can support the rear suspension 44. In implementations where the lower surface of the rear arm 15 supports one end 44a of the rear suspension 44, the other end 44b of the rear suspension 44 is often supported on a member located higher than the rear arm 15. In such implementations, the rear suspension 44 is positioned to extend from below the rear arm 15 through a suspension hole 15b, which is formed between the right and left arms 3 and 2 and located rearward of the pivot shaft 21 of the rear arm 15 (see FIGS. 5 and 6, for example). In such arrangements, it is difficult to offset the support boss 4 from the central portion as measured in the left/right direction toward the left or right. In the present embodiment, as described above, the support boss 4 can be located on one of the right and left arms 3 and 2 and still located in the central portion of the rear arm 15 as measured in the left/right direction. Thus, arrangements in which the rear suspension 44 is supported by a member located lower than the rear arm 15 is suitable for the present embodiment.

The front right portion 3F of the right arm 3 may have a right interior wall portion 3d1, 3d2 defining the first space S1 from front or rear. The front left portion 2F of the left arm 2 may have a left interior wall portion 2d1, 2d2 defining the second space 2S from front or rear. In this case, a left edge of the right interior wall portion 3d1, 3d2 and a right edge of the left interior wall portion 2d1, 2d2 may be constructed so as to contact each other. This further increases the stiffness of the front portion 15F of the rear arm 15. The implementation of the interior wall portion is not limited to the above embodiment. For example, the right interior wall portion may be configured to separate the first space S1 into sub-spaces arranged in a front/rear direction. The left interior wall portion may be configured to separate the second space S2 into sub-spaces arranged in a front/rear direction.

The fastening member(s) 5 may be located at each of positions corresponding to an upper edge and a lower edge of the right interior wall portion 2d1, 2d2 and the left interior wall portion 3d1, 3d2. Thus, the ensuring of the stiffness of the portions joined by the fastening member(s) 5 can be efficiently achieved.

The fastening member 5 may include a fastening member 5 located on a plane at which the right interior wall portion 3d1, 3d2 and the left interior wall portion 2d1, 2d2 contact each other for fastening the right interior wall portion 3d1, 3d2 and the left interior wall portion 2d1, 2d2. Thus, the ensuring of the stiffness of the portions joined by the fastening members 5 can be achieved more efficiently.

The fastening member 5 may comprise a plurality of fastening members 5 arranged along the right interior wall portion 3d1, 3d2 or the left interior wall portion 2d1, 2d2. Thus, the ensuring of the stiffness of the portions joined by the fastening members 5 can be achieved more efficiently.

The support boss 4 is positioned to cross a virtual extension plane of the right interior wall portion 3d1, 3d2 or the left interior wall portion 2d1, 2d2 extended upward or downward. This increases the effects of the right or left wall portion 2d1, 2d2 or 3d1, 3d2 increasing the stiffness against forces that have been transmitted via the support boss 4.

A cover 36 may be further provided for covering a portion of the fastening member 5 exposed toward an outside of the rear arm 15. Thus, the exposed portions of the fastening members 5 are not visible. This improves appearance.

The right pivot shaft hole 3a of the front right portion 3F and the left pivot shaft hole 2a of the front left portion 2F are arranged in a continuous manner in a left/right direction. The rear arm 15 may further have a collar 35C in contact with both an inner periphery of the right pivot shaft hole 3a and an inner periphery of the left pivot shaft hole 2a. This makes it relatively easy to precisely position the right pivot shaft hole 3a of the right arm 3 and the left pivot shaft hole 2a of the left arm 2 in a coaxial manner. For example, if the precision in the positions of the right pivot shaft hole 3a and left pivot shaft hole 2a is provided before the arms are joined, no or little additional machining is needed to provide the precision in the positions of these members after the arms are joined.

The front right wall 3b may comprise a lower wall 3b-d defining the first space S1 of the front right portion 3F from below. The front left wall 2b may comprise a lower wall 2b-d defining the second space S2 of the front left portion 2F from below. In this case, the lower wall 3b-d of the front right portion 3F and the lower wall 2b-d of the front left wall 2F may have matching planes 32d that contact each other. The lower wall 3b-d of the front right wall 3b or the lower wall 3b-d of the front left wall 3b may have a groove 34 formed by notching the matching plane 32d for the lower wall 3b-d of the front right wall 3b or the lower wall 2b-d of the front left wall 2b. The groove 34 extends in a thickness direction of the lower wall 2b-d or 3b-d from an interior to an exterior.

In the above arrangement, when the right and left arms 3 and 2 are joined and the lower wall 3b-d of the front right portion 3b is in contact with the lower wall 2b-d of the front left portion 2b, the groove 34 formed on the matching plane 32d forms a through-hole in the lower wall 3b-d or 2b-d. For example, when liquid such as water enters the hollow portion 15c of the rear arm15, this liquid can be removed through the through-hole in the lower wall.

According to an embodiment of the present invention there is also provided a method of manufacturing a rear arm 15 for a straddled vehicle formed by joining a right arm 3 and a left arm 2. The rear arm 15 manufactured by this manufacturing method comprises a front portion 15F having a pivot shaft hole system 15a into which a pivot shaft 21 is inserted and a hollow portion 15c located rearward of the pivot shaft hole system 15a, and a rear portion 15B extending rearward from the front portion 15F and having an axle hole into which an axle of a rear wheel is inserted, the axle hole being located at a rear end of the rear portion. The manufacture method comprises: a right arm casting step; a left arm casting step; and a joining step. The right arm casting step integrally forms, by die casting, a right arm having a front right portion having a right pivot shaft hole system 15a forming a right portion of the pivot shaft hole system 15a and having a front right wall defining a first space with a left side thereof opened and forming a right portion of the hollow portion, and a rear right portion extending rearward from the front right portion and having a right axle hole forming a right portion of the axle hole. The left arm casting step integrally forms, by die casting, a left arm 3 having a front left portion 2F having a left pivot shaft hole 2a forming a left portion of the pivot shaft hole system 15a and having a front left wall 2b defining a second space S2 with a right side thereof opened and forming a left portion of the hollow portion 15c, and a rear left portion 2B extending rearward from the front left portion 2F and having a left axle hole 2f forming a left portion of the axle hole system 15f. The joining step joins the front right portion 3F of the right arm 3 and the front left portion 2Fof the left arm 2 using a fastening member 5. The right arm casting step or the left arm casting step integrally forms a support boss 4 on only one of the right arm 3 and the left arm 2 for supporting one end 44a of a rear suspension 44.

The above method of manufacturing can produce a rear arm with high stiffness having a hollow portion 15c located in the front portion 15F using a right and left arms 3 and 2 having a construction suitable for being die-cast. Further, since the support boss 4 is only provided on one of the right and left arms 3 and 2, it is relatively easy to ensure sufficient stiffness of the front portion 15F including the support boss 4 and sufficient strength of the support boss 4. This makes it possible to ensure sufficient strength and stiffness of the rear arm 15 when the right and left arms 3 and 2 are joined using a fastening member 5. That is, it is possible to ensure sufficient stiffness without joining the right and left arms 3 and 2 by welding. Since no distortion by welding occurs, it is easy to control the precision in the positions of the pivot shaft 21 and support boss 4 during the manufacture process. Further, since the support boss 4 is not divided into left and right portions, no processing such as additional machining is needed to align left and right portions of a support boss 4.

Although embodiments of the present invention have been described, the above embodiments are merely examples that may be used to carry out the present invention. Thus, the present invention is not limited to the above embodiments, and the above embodiments may be modified as appropriate without departing from the spirit of the invention.

In the above embodiments, the support boss 4 is provided only on the left arm 2. Alternatively, a support boss 4 may be provided only on the right arm 3. In such implementations, one of the matching planes for the right and left arms 3 and 2 may be offset toward the left.

If the support boss 4 is located to overlap the suspension hole 15b as measured in the left/right direction, the rear suspension 44 is unlikely to contact the left and right arms 2b and 3b. Further, if the matching planes 32u and 32f are also located to overlap the suspension hole 15b, the size of one of the right and left arms is prevented from becoming extremely large compared with the size of the other arm. This makes it easy to perform die cutting during die casting of the right or left arm.

In the above embodiments, the front right wall 3b is formed to define the first space with its left side opened from above and below, from the front and rear, and from the right. Alternatively, the front right wall 3b may be formed to define a space with at least one other one of the top, bottom, front, rear or right planes opened depending on the required stiffness and weight, for example. Similarly, the front left wall 2b may be formed to define a space with at least one other one of the top, bottom, front, rear and left planes opened.

Although the above embodiments are examples where the rear arm of the present invention is used in a two-wheeled motorcycle, the use of the rear arm of the present invention is not limited to two-wheeled motorcycles. The rear arm of the present invention may be used in a straddled vehicle other than two-wheeled motorcycles (e.g. three-wheeled vehicles). As used herein, straddled vehicle generally refers to a vehicle that a rider can ride in a position in which the rider may straddle a saddle.

It will be appreciated that the embodiments of the present invention hereinbefore described are given by way of example only, and are not intended to limit the scope of the invention in any way.

It will be appreciated that the term straddled vehicle used herein, and as used in the art, is meant to include at least the following terms also used in the art:
straddled vehicle, straddle-type vehicle, saddle-straddling type vehicle, and includes: motorcycles and motorbikes as well as motor tricycles, quad bikes and All Terrain Vehicles (ATVs), scooters and mopeds.

## Claims

1. A rear arm (15) for a straddled vehicle (10), the rear arm (15) comprising a front portion (15F) having a pivot shaft hole (15a) into which a pivot shaft (21) is insertable, a hollow portion (15c) located rearward of the pivot shaft hole (15a), and a rear portion (15B) extending rearward from the hollow portion (15c) and having an axle hole (15f) into which an axle of a rear wheel is insertable, the rear arm further comprising:
a right arm (3); and
a left arm (2) joined to the right arm(3), wherein
the right arm (3) is a one piece die cast body comprising a front right portion (3F) and a rear right portion (3B), the front right portion (3F) having a right pivot shaft hole (3a) forming a right portion of the pivot shaft hole (15a) and having a front right wall (3b) defining a first space (S1) having a left side opened and forming a right portion of the hollow portion (15c), the rear right portion (3B) extending rearward from the front right portion (3F) and having a right axle hole (3f) forming a right portion of the axle hole (15f),
the left arm (2) is a one piece die cast body comprising a front left portion (2F) and a rear left portion (2B), the front left portion (2F) having a left pivot shaft hole (2a) forming a left portion of the pivot shaft hole (15a) and having a front left wall (2b) defining a second space (S2) having a right side opened and forming a left portion of the hollow portion(15c), the rear left portion (2B) extending rearward from the front left portion (2F) and having a left axle hole (2f) forming a left portion of the axle hole (15f), and
a support boss (4) for supporting one end of a rear suspension (44) is integrally formed on only one of the right arm (3) and the left arm (2), **characterised in that** the front right portion (3F) of the right arm (3) and the front left portion (2F) of the left arm (2) are joined to each other by a plurality of fastening members (5a to 5j).

2. The rear arm (15) according to claim 1, wherein the support boss (4) is located in a central portion of the rear arm (15) as measured in a left/right direction.

3. The rear arm (15) according to either of claims 1 or 2, wherein at least one of matching planes (32f, 32u, 32d) at which the front right wall (3b) of the right arm (3) and the front left wall (2b) of the left arm (2) contact each other is displaced, from a center plane (C1) as measured in the left/right direction including a center of the pivot shaft hole (15a) as measured in the left/right direction, toward one of the right and left arms (2, 3) where the support boss (4) is not located, optionally wherein
the matching planes (32f, 32u, 32d) comprise a plane (32f, 32u) located in the central portion as measured in the left/right direction and a plane (32d) displaced, from the plane located in the central portion, toward the one of the right and left arms (2, 3) where the support boss (4) is not located.

4. The rear arm (15) according to claim 3, wherein:
one of the front right wall (3b) and the front left wall (2b) has a side wall portion defining the hollow portion (15c) from a side, and
the side wall portion has a recess (6E, 6F, 6G, 6H) extending from the side wall portion toward the other one of the front right wall (3b) and the front left wall (2b) and having a bottom forming a fastening seat for fastening by a number of the fastening members (5e, 5f, 5g, 5h).

5. The rear arm (15) according to claim 4, wherein the recess (6E, 6F, 6G, 6H) is located on one of the right and left arms (2, 3) where the support boss (4) is not located.

6. The rear arm (15) according to any one of claims 1 to 5, wherein the support boss (4) is located on one of a lower wall defining the first space (S1) of the front right portion (3F) from below and a lower wall (2b-d) defining the second space (S2) of the front left portion (2F) from below.

7. The rear arm (15) according to any one of claims 1 to 6, wherein:
the front right wall (3b) has a right interior wall portion (3d1, 3d2) defining the first space (S1) from front or rear,
the front left wall (2b) has a left interior wall portion (2d1,2d2) defining the second space (S2) from front or rear, and
a left edge of the right interior wall portion (3d1, 3d2) and a right edge of the left interior wall portion (2d1, 2d2) contact each other, optionally wherein
a number of the fastening members (5a, 5b, 5c, 5d) is located at each of positions corresponding to an upper edge and a lower edge of the right interior wall portion (3d1, 3d2) and the left interior wall portion (2d1, 2d2).

8. The rear arm (15) according to claim 7, wherein a number of the fastening members (5e, 5f, 5g, 5h) fasten the right interior wall portion (3d1, 3d2) and the left interior wall portion (2d1, 2d2) on a plane at which the right interior wall portion (3d1, 3d2) and the left interior wall portion (2d1, 2d2) contact each other.

9. The rear arm (15) according to either of claims 7 or 8, wherein a number of the fastening members (5b, 5h, 5d, 5a, 5e, 5f, 5g) are arranged along the right interior wall portion (3d1, 3d2) or the left interior wall portion (2d1, 2d2).

10. The rear arm (15) according to any one of claims 7 to 9, wherein the support boss (4) is positioned to cross a virtual extension plane of the right interior wall portion (3d1, 3d2) or the left interior wall portion (2d1, 2d2) extended upward or downward.

11. The rear arm (15) according to any one of claims 1 to 10, wherein a cover (36) is provided for covering a portion of a number of the fastening members (5e, 5f, 5h) exposed toward an outside of the rear arm.

12. The rear arm (15) according to any one of claims 1 to 11, wherein the right pivot shaft hole (3a) of the front right portion (3F) and the left pivot shaft hole (2a) of the front left portion (2F) are arranged in a continuous manner in a left/right direction, and
the rear arm (15) further comprises a collar (35C) in contact with both an inner periphery of the right pivot shaft hole (3a) and an inner periphery of the left pivot shaft hole (2a).

13. The rear arm (15) according to any one of claims 1 to 12, wherein:
the front right wall (3b) comprises a lower wall defining the first space (S1) of the front right portion (3F) from below,
the front left wall (2b) comprises a lower wall (2b-d) defining the second space (S2) of the front left portion (2F) from below,
the lower wall of the front right wall (3b) and the lower wall (2b-d) of the front left wall (2b) have matching planes (32d) that are arranged in a left/right direction to face each other and contact each other, and
the lower wall of the front right wall (3b) or the lower wall (2b-d) of the front left wall (2b) has a groove (34) formed by notching the matching plane (32d) for the lower wall of the front right wall (3b) or the lower wall (2b-d) of the front left wall (2b), the groove (34) extending in a thickness direction of the lower wall (2b-d) from an interior to an exterior.

14. A straddled vehicle (10) comprising the rear arm (15) according to any one of claims 1 to 13.

15. A method of manufacturing a rear arm (15) for a straddled vehicle (10), the rear arm comprising a front portion (15F), having a pivot shaft hole (15a) into which a pivot shaft (21) is insertable and a hollow portion (15c) located rearward of the pivot shaft hole (15a), and a rear portion (15B) extending rearward from the hollow portion (15c) and having an axle hole (15f) into which an axle of a rear wheel is insertable, the manufacturing method comprising:
a right arm casting step that integrally forms, by die casting, a right arm (3) comprising a front right portion (3F) and a rear right portion (3B), the front right portion (3F) having a right pivot shaft hole (3a) forming a right portion of the pivot shaft hole (15a) and having a front right wall (3b) defining a first space (S1) having a left side opened and forming a right portion of the hollow portion (15c), the rear right portion (3B) extending rearward from the front right portion (3F) and having a right axle hole (3f) forming a right portion of the axle hole (15f);
a left arm casting step that integrally forms, by die casting, a left arm (2) comprising a front left portion (2F) and a rear left portion (2B), the front left portion (2F) having a left pivot shaft hole (2a) forming a left portion of the pivot shaft hole (15a) and having a front left wall (2b) defining a second space (S2) having a right side opened and forming a left portion of the hollow portion (15c), the rear left portion (2B) extending rearward from the front left portion (2F) and having a left axle hole (2f) forming a left portion of the axle hole (15f); and
a joining step that joins the front right portion (3F) of the right arm (3) and the front left portion (2F) of the left arm (2) using a plurality of fastening member(s) (5a to 5j); wherein
the right arm casting step or the left arm casting step integrally forms a support boss (4) for supporting one end of a rear suspension (44) on only one of the right arm (2) and the left arm (3), **characterised by** a joining step that joins the front right portion (3F) of the right arm (3) and the front left portion (2F) of the left arm (2) using a plurality of fastening members (5a to 5j).

## Patentansprüche

1. Hinterarm (15) für ein Reitsitzfahrzeug (10), wobei der Hinterarm (15) einen vorderen Abschnitt (15F), der ein Schwenkachsenloch (15a) aufweist, in das eine Schwenkachse (21) eingesetzt werden kann, einen hohlen Abschnitt (15c), der von dem Schwenkachsenloch (15a) nach hinten angeordnet ist, und einen hinteren Abschnitt (15B), der sich von dem hohlen Abschnitt (15c) nach hinten erstreckt und ein Achsenloch (15f) aufweist, in das eine Achse eines Hinterrades eingesetzt werden kann, umfasst, wobei der Hinterarm ferner Folgendes umfasst:
einen rechten Arm (3) und
einen linken Arm (2), der mit dem rechten Arm (3) verbunden ist, wobei
der rechte Arm (3) ein einteiliger druckgegossener Körper ist, der einen vorderen rechten Abschnitt (3F) und einen hinteren rechten Abschnitt (3B) umfasst, wobei der vordere rechte Abschnitt (3F) ein rechtes Schwenkachsenloch (3a) aufweist, das einen rechten Abschnitt des Schwenkachsenlochs (15a) bildet, und eine vordere rechte Wand (3b) aufweist, die einen ersten Raum (S1) definiert, der eine linke geöffnete Seite aufweist und einen rechten Abschnitt des hohlen Abschnitts (15c) bildet, wobei sich der hintere rechte Abschnitt (3B) von dem vorderen rechten Abschnitt (3F) nach hinten erstreckt und ein rechtes Achsenloch (3f) aufweist, das einen rechten Abschnitt des Achsenlochs (15f) bildet,
der linke Arm (2) ein einteiliger druckgegossener Körper ist, der einen vorderen linken Abschnitt (2F) und einen hinteren linken Abschnitt (2B) umfasst, wobei der vordere linke Abschnitt (2F) ein linkes Schwenkachsenloch (2a) aufweist, das einen linken Abschnitt des Schwenkachsenlochs (15a) bildet, und eine vordere linke Wand (2b) aufweist, die einen zweiten Raum (S2) definiert, der eine rechte geöffnete Seite aufweist und einen linken Abschnitt des hohlen Abschnitts (15c) bildet, wobei sich der hintere linke Abschnitt (2B) von dem vorderen linken Abschnitt (2F) nach hinten erstreckt und ein linkes Achsenloch (2f) aufweist, das einen linken Abschnitt des Achsenlochs (15f) bildet,
und
einen Stützansatz (4) zum Stützen eines Endes einer hinteren Aufhängung (44) integral an nur einem von dem rechten Arm (3) und dem linken Arm (2) geformt ist, **dadurch gekennzeichnet, dass** der vordere rechte Abschnitt (3F) des rechten Arms (3) und der vordere linke Abschnitt (2F) des linken Arms (2) durch mehrere Befestigungselemente (5a bis 5j) miteinander verbunden sind.

2. Hinterarm (15) nach Anspruch 1, wobei der Stützansatz (4) in einem mittleren Abschnitt des rechten Arms (15), gemessen in einer Links-Rechts-Richtung, angeordnet ist.

3. Hinterarm (15) nach einem der Ansprüche 1 oder 2, wobei mindestens eine von passenden Ebenen (32f, 32u, 32d), an denen sich die vordere rechte Wand (3b) des rechten Arms (3) und die vordere linke Wand (2b) des linken Arm (2) einander berühren, von einer Mittelebene (C1), gemessen in der Links-Rechts-Richtung, die eine Mitte des Schwenkachsenlochs (15a), gemessen in der Links-Rechts-Richtung, einschließt, zu einem von dem rechten und dem linken Arm (2, 3), wo der Stützansatz (4) nicht angeordnet ist, hin verschoben ist, wahlweise wobei
die passenden Ebenen (32f, 32u, 32d) eine Ebene (32f, 32u), die in dem mittleren Abschnitt, gemessen in der Links-Rechts-Richtung, angeordnet ist, und eine Ebene (32d), die, von der Ebene, die in dem mittleren Abschnitt angeordnet ist, zu dem einen von dem rechten und dem linken Arm (2, 3), wo der Stützansatz (4) nicht angeordnet ist, hin verschoben ist, umfassen.

4. Hinterarm (15) nach Anspruch 3, wobei:
die eine von der vorderen rechten Wand (3b) und der vorderen linken Wand (2b) einen Seitenwandabschnitt aufweist, der den hohlen Abschnitt (15c) von einer Seite definiert, und
der Seitenwandabschnitt eine Aussparung (6E, 6F, 6G, 6H) aufweist, die sich von dem Seitenwandabschnitt zu der anderen von der vorderen rechten Wand (3b) und der vorderen linken Wand (2b) hin erstreckt und eine Sohle aufweist, die einen Befestigungssitz zum Befestigen durch eine Anzahl der Befestigungselemente (5e, 5f, 5g, 5h) bildet.

5. Hinterarm (15) nach Anspruch 4, wobei die Aussparung (6E, 6F, 6G, 6H) an einem von dem rechten und dem linken Arm (2, 3), wo der Stützansatz (4) nicht angeordnet ist, angeordnet ist.

6. Hinterarm (15) nach einem der Ansprüche 1 bis 5, wobei der Stützansatz (4) an einer von einer unteren Wand, die den ersten Raum (S1) des vorderen rechten Abschnitts (3F) von unten definiert, und einer unteren Wand (2b-d), die den zweiten Raum (S2) des vorderen linken Abschnitts (2F) von unten definiert, angeordnet ist.

7. Hinterarm (15) nach einem der Ansprüche 1 bis 6, wobei:
die vordere rechte Wand (3b) einen rechten inneren Wandabschnitt (3d1, 3d2) aufweist, der den ersten Raum (S1) von vorn oder hinten definiert,
die vordere linke Wand (2b) einen linken inneren Wandabschnitt (2d1, 2d2) aufweist, der den zweiten Raum (S2) von vorn oder hinten definiert, und
eine linke Kante des rechten inneren Wandabschnitts (3d1, 3d2) und eine rechte Kante des linken inneren Wandabschnitts (2d1, 2d2) einander berühren, wahlweise wobei
eine Anzahl der Befestigungselemente (5a, 5b, 5c, 5d) an jeder von Positionen angeordnet ist, die einer oberen Kante und einer unteren Kante des rechten inneren Wandabschnitts (3d1, 3d2) und des linken inneren Wandabschnitts (2d1, 2d2) entsprechen.

8. Hinterarm (15) nach Anspruch 7, wobei eine Anzahl der Befestigungselemente (5e, 5f, 5g, 5h) den rechten inneren Wandabschnitt (3d1, 3d2) und den linken inneren Wandabschnitt (2d1, 2d2) auf einer Ebene befestigen, an welcher der rechte innere Wandabschnitt (3d1, 3d2) und der linke innere Wandabschnitt (2d1, 2d2) einander berühren.

9. Hinterarm (15) nach einem der Ansprüche 7 oder 8, wobei eine Anzahl der Befestigungselemente (5b, 5h, 5d, 5a, 5e, 5f, 5g) entlang des rechten inneren Wandabschnitts (3d1, 3d2) oder des linken inneren Wandabschnitts (2d1, 2d2) angeordnet sind.

10. Hinterarm (15) nach einem der Ansprüche 7 bis 9, wobei der Stützansatz (4) so angeordnet ist, dass er eine virtuelle Ausdehnungsebene des rechten inneren Wandabschnitts (3d1, 3d2) oder des linken inneren Wandabschnitts (2d1, 2d2) kreuzt, die nach oben oder nach unten verlängert ist.

11. Hinterarm (15) nach einem der Ansprüche 1 bis 10, wobei eine Abdeckung (36) zum Abdecken eines Abschnitts einer Anzahl der Befestigungselemente (5e, 5f, 5h), der zu einer Außenseite des Hinterarms hin freigelegt ist, bereitgestellt wird.

12. Hinterarm (15) nach einem der Ansprüche 1 bis 11, wobei das rechte Schwenkachsenloch (3a) des vorderen rechten Abschnitts (3F) und das linke Schwenkachsenloch (2a) des vorderen linken Abschnitts (2F) auf eine durchgehende Weise in einer Links-Rechts-Richtung angeordnet sind und
der Hinterarm (15) ferner einen Bund (35C) in Berührung mit sowohl einem Innenumfang des rechten Schwenkachsenlochs (3a) als auch einem Innenumfang des linken Schwenkachsenlochs (2a) aufweist.

13. Hinterarm (15) nach einem der Ansprüche 1 bis 12, wobei:
die vordere rechte Wand (3b) eine untere Wand umfasst, die den ersten Raum (S1) des vorderen rechten Abschnitts (3F) von unten definiert,
die vordere linke Wand (2b) eine untere Wand (2b-d) umfasst, die den zweiten Raum (S2) des vorderen linken Abschnitts (2F) von unten definiert,
die untere Wand der vorderen rechten Wand (3b) und die untere Wand (2b-d) der vorderen linken Wand (2b) passende Ebenen (32d) aufweisen, die in einer Links-Rechts-Richtung so angeordnet sind, dass sie einander gegenüberliegen und einander berühren, und
die untere Wand der vorderen rechten Wand (3b) oder die untere Wand (2b-d) der vorderen linken Wand (2b) eine Rille (34) aufweist, die durch Kerben der passenden Ebene (32d) für die untere Wand der vorderen rechten Wand (3b) oder die untere Wand (2b-d) der vorderen linken Wand (2b) geformt ist, wobei sich die Rille (34) in einer Dickenrichtung der unteren Wand (2b-d) von einem Inneren zu einem Äußeren erstreckt.

14. Reitsitzfahrzeug (10), das den Hinterarm (15) nach einem der Ansprüche 1 bis 13 umfasst.

15. Verfahren zum Herstellen eines Hinterarms (15) für ein Reitsitzfahrzeug (10), wobei der Hinterarm einen vorderen Abschnitt (15F), der ein Schwenkachsenloch (15a) aufweist, in das eine Schwenkachse (21) eingesetzt werden kann, und einen hohlen Abschnitt (15c), der von dem Schwenkachsenloch (15a) nach hinten angeordnet ist, und einen hinteren Abschnitt (15B), der sich von dem hohlen Abschnitt (15c) nach hinten erstreckt und ein Achsenloch (15f) aufweist, in das eine Achse eines Hinterrades eingesetzt werden kann, umfasst, wobei das Herstellungsverfahren Folgendes umfasst:
einen Gießschritt für einen rechten Arm, der, durch Druckgießen, integral einen rechten Arm (3) formt, der einen vorderen rechten Abschnitt (3F) und einen hinteren rechten Abschnitt (3B) umfasst, wobei der vordere rechte Abschnitt (3F) ein rechtes Schwenkachsenloch (3a) aufweist, das einen rechten Abschnitt des Schwenkachsenlochs (15a) bildet, und eine vordere rechte Wand (3b) aufweist, die einen ersten Raum (S1) definiert, der eine linke geöffnete Seite aufweist und einen rechten Abschnitt des hohlen Abschnitts (15c) bildet, wobei sich der hintere rechte Abschnitt (3B) von dem vorderen rechten Abschnitt (3F) nach hinten erstreckt und ein rechtes Achsenloch (3f) aufweist, das einen rechten Abschnitt des Achsenlochs (15f) bildet,
einen Gießschritt für einen linken Arm, der, durch Druckgießen, integral einen linken Arm (2) formt, der einen vorderen linken Abschnitt (2F) und einen hinteren linken Abschnitt (2B) umfasst, wobei der vordere linke Abschnitt (2F) ein linkes Schwenkachsenloch (2a) aufweist, das einen linken Abschnitt des Schwenkachsenlochs (15a) bildet, und eine vordere linke Wand (2b) aufweist, die einen zweiten Raum (S2) definiert, der eine rechte geöffnete Seite aufweist und einen linken Abschnitt des hohlen Abschnitts (15c) bildet, wobei sich der hintere linke Abschnitt (2B) von dem vorderen linken Abschnitt (2F) nach hinten erstreckt und ein linkes Achsenloch (2f) aufweist, das einen linken Abschnitt des Achsenlochs (15f) bildet, und
einen Verbindungsschritt, der den vorderen rechten Abschnitt (3F) des rechten Arms (3) und den vorderen linken Abschnitt (2F) des linken Arms (2) unter Verwendung mehrerer Befestigungselemente (5a bis 5j) verbindet, wobei
der Gießschritt für einen rechten Arm oder der Gießschritt für einen linken Arm integral einen Stützansatz (4) zum Stützen eines Endes einer hinteren Aufhängung (44) an nur einem von dem rechten Arm (2) und dem linken Arm (3) formt, **gekennzeichnet durch** einen Verbindungsschritt, der den vorderen rechten Abschnitt (3F) des rechten Arms (3) und den vorderen linken Abschnitt (2F) des linken Arms (2) unter Verwendung mehrerer Befestigungselemente (5a bis 5j) verbindet.

## Revendications

1. Bras arrière (15) pour un véhicule à enfourcher (10), le bras arrière comprenant une partie avant (15F) comportant un trou d'arbre de pivot (15a) dans lequel un arbre de pivot (21) peut être inséré, une partie creuse (15c) située à l'arrière du trou d'arbre de pivot (15a), et une partie arrière (15B) s'étendant vers l'arrière à partir de la partie creuse (15c) et comportant un trou d'essieu (15f) dans lequel un essieu d'une roue arrière peut être inséré, le bras arrière comprenant en outre :
un bras droit (3) ; et
un bras gauche (2) relié au bras droit (3), dans lequel :
le bras droit (3) est un corps coulé sous pression d'une seule pièce, comprenant une partie avant droite (3F) et une partie arrière droite (3B), la partie avant droite (3F) comportant un trou d'arbre de pivot droit (3a) formant une partie droite du trou d'arbre de pivot (15a) et comportant une paroi avant droite (3b) définissant un premier espace (S1) comportant un côté gauche ouvert et formant une partie droite de la partie creuse (15c), la partie arrière droite (3B) s'étendant vers l'arrière à partir de la partie avant droite (3F) et comportant un trou d'essieu droit (3f) formant une partie droite du trou d'essieu (15f) ;
le bras gauche (2) est un corps coulé sous pression d'une seule pièce, comprenant une partie avant gauche (2F) et une partie arrière gauche (2B), la partie avant gauche (2F) comportant un trou d'arbre de pivot gauche (2a) formant une partie gauche du trou d'arbre de pivot (15a) et comportant une paroi avant gauche (2b) définissant un deuxième espace (S2) comportant un côté droit ouvert et formant une partie gauche de la partie creuse (15c), la partie arrière gauche (2B) s'étendant vers l'arrière à partir de la partie avant gauche (2F) et comportant un trou d'essieu gauche (2f) formant une partie gauche du trou d'essieu (15f) ; et
un bossage de support (4) pour supporter une extrémité d'une suspension arrière (44) est formé d'une seule pièce sur uniquement un du bras droit (3) et du bras gauche (2), **caractérisé en ce que** la partie avant droite (3F) du bras droit (3) et la partie avant gauche (2F) du bras gauche (2) sont reliées l'une à l'autre par plusieurs éléments de fixation (5a à 5j).

2. Bras arrière (15) selon la revendication 1, dans lequel le bossage de support (4) est agencé dans une partie centrale du bras droit (15), mesuré dans une direction allant de la gauche vers la droite.

3. Bras arrière (15) selon l'une des revendications 1 ou 2, dans lequel au moins un des plans d'appariement (32f, 32u, 32d), au niveau duquel la paroi avant droite (3b) du bras droit (3) et la paroi avant gauche (2b) du bras gauche (2) entrent en contact, est déplacé par rapport à un plan central (C1), mesuré dans la direction allant de la gauche vers la droite, incluant un centre du trou d'arbre de pivot (15a), mesuré dans la direction allant de la gauche vers la droite, vers l'un des bras droit et gauche (2, 3), où le bossage de support (4) n'est pas situé, dans lequel, optionnellement :
les plans d'appariement (32f, 32u, 32d) comprennent un plan (32f, 32u) situé dans la partie centrale, mesuré dans la direction allant de la gauche vers la droite, et un plan (32d) déplacé par rapport au plan situé dans la partie centrale, vers l'un des bras droit et gauche (2, 3), où le bossage de support (4) n'est pas situé.

4. Bras arrière (15) selon la revendication 3, dans lequel :
une de la paroi avant droite (3b) ou la paroi avant gauche (2b) comporte une partie de paroi latérale définissant la partie creuse (15c) à partir d'un côté ; et
la partie de paroi latérale comporte un évidement (6E, 6F, 6G, 6H) s'étendant de la partie de paroi latérale vers l'autre de la paroi avant droite (3b) et de la paroi avant gauche (2b), et comportant une partie inférieure formant un siège de fixation en vue de la fixation par plusieurs des éléments de fixation (5e, 5f, 5g, 5h).

5. Bras arrière (15) selon la revendication 4, dans lequel l'évidement (6E, 6F, 6G, 6H) est situé sur l'un des bras droit ou gauche (2, 3), où le bossage de support (4) n'est pas situé.

6. Bras arrière (15) selon l'une quelconque des revendications 1 à 5, dans lequel le bossage de support (4) est situé sur une d'une paroi inférieure définissant le premier espace (S1) de la partie avant droite (3F) par en bas, et d'une paroi inférieure (2b-d) définissant le deuxième espace (S2) de la partie avant gauche (2F) par en bas.

7. Bras arrière (15) selon l'une quelconque des revendications 1 à 6, dans lequel :
la paroi avant droite (3b) comporte une partie de paroi interne droite (3d1, 3d2) définissant le premier espace (S1), à partir de l'avant ou de l'arrière ;
la paroi avant gauche (2b) comporte une partie de paroi interne gauche (2d1, 2d2) définissant le deuxième espace (S2), à partir de l'avant ou de l'arrière ; et
un bord gauche de la partie de paroi interne droite (3d1, 3d2) et un bord droit de la partie de paroi interne gauche (2d1, 2d2) sont en contact l'un avec l'autre ; dans lequel, optionnellement :
plusieurs des éléments de fixation (5a, 5b, 5c, 5d) sont agencés au niveau de chacune des positions correspondant à un bord supérieur et à un bord inférieur de la partie de paroi interne droite (3d1, 3d2) et de la partie de paroi interne gauche (2d1, 2d2).

8. Bras arrière (15) selon la revendication 7, dans lequel plusieurs des éléments de fixation (5e, 5f, 5g, 5h) fixent la partie de paroi interne droite (3d1, 3d1) et la partie de paroi interne gauche (2d1, 2d2) au niveau d'un plan au niveau duquel la partie de paroi interne droite (3d1, 3d2) et la partie de paroi interne gauche (2d1, 2d2) sont en contact l'une avec l'autre.

9. Bras arrière (15) selon l'une des revendications 7 ou 8, dans lequel plusieurs des éléments de fixation (5b, 5h, 5d, 5e, 5f, 5g) sont agencés le long de la partie de paroi interne droite (3d1, 3d2) ou de la partie de paroi interne gauche (2d1, 2d2).

10. Bras arrière (15) selon l'une quelconque des revendications 7 à 9, dans lequel le bossage de support (4) est positionné de sorte à traverser un plan d'extension virtuel de la partie de paroi interne droite (3d1, 3d2) ou de la partie de paroi interne gauche (2d1, 2d2) étendues vers le haut ou vers le bas.

11. Bras arrière (15) selon l'une quelconque des revendications 1 à 10, dans lequel un couvercle (36) est fourni pour recouvrir une partie de plusieurs des éléments de fixation (5e, 5f, 5h) exposée vers un extérieur du bras arrière.

12. Bras arrière (15) selon l'une quelconque des revendications 1 à 11, dans lequel le trou d'arbre de pivot droit (3a) de la partie avant droite (3F) et le trou d'arbre de pivot gauche (2a) de la partie avant gauche (2F) sont agencés de manière continue dans une direction allant de la gauche vers la droite ; et
le bras arrière (15) comprend en outre un collier (35C) en contact avec une périphérie interne du trou d'arbre de pivot droit (3a) ainsi qu'avec une périphérie interne du trou d'arbre de pivot gauche (2a).

13. Bras arrière (15) selon l'une quelconque des revendications 1 à 12, dans lequel :
la paroi avant droite (3b) comprend une paroi inférieure définissant le premier espace (S 1) de la partie avant droite (3F) par en bas ;
la paroi avant gauche (2b) comprend une paroi inférieure (2b-d) définissant le deuxième espace (S2) de la partie avant gauche (2F) par en bas ;
la paroi inférieure de la paroi avant droite (3b) et la paroi inférieure (2b-d) de la paroi avant gauche (2B) comportent des plans d'appariement (32d) agencés dans une direction allant de la gauche vers la droite pour se faire face et être en contact l'un avec l'autre ; et
la paroi inférieure de la paroi avant droite (3b) ou la paroi inférieure (2b-d) de la paroi avant gauche (2b) comporte une rainure (34) formée par entaillage du plan d'appariement (32d) pour la paroi inférieure de la paroi avant droite (3b) ou la paroi inférieure (2b-d) de la paroi avant gauche (2b), la rainure (34) s'étendant dans une direction de l'épaisseur de la paroi inférieure (2b-d), d'un intérieur vers un extérieur.

14. Véhicule à enfourcher (10) comprenant le bras arrière (15) selon l'une quelconque des revendications 1 à 13.

15. Procédé de fabrication d'un bras arrière (15) pour un véhicule à enfourcher (10), le bras arrière comportant une partie avant (15F) comportant un trou d'arbre de pivot (15a), dans lequel un arbre de pivot (21) peut être inséré, et une partie creuse (15c) située à l'arrière du trou d'arbre de pivot (15a), et une partie arrière (15B) s'étendant vers l'arrière à partir de la partie creuse (15c) et comportant un trou d'essieu (15f), dans lequel un essieu d'une roue arrière peut être inséré, le procédé de fabrication comprenant les étapes ci-dessous :
une étape de coulée du bras droit, formant d'une seule pièce, par coulée sous pression, un bras droit (3) comprenant une partie avant droite (3F) et une partie arrière droite (38), la partie avant droite (3F) comportant un trou d'arbre de pivot droit (3a) formant une partie droite du trou d'arbre de pivot (15a) et comportant une paroi avant droite (3b) définissant un premier espace (S1) comportant un côté gauche ouvert et formant une partie droite de la partie creuse (15c), la partie arrière droite (3B) s'étendant vers l'arrière à partir de la partie avant droite (3F) et comportant un trou d'essieu droit (3f) formant une partie droite du trou d'essieu (15f) ;
une étape de coulée du bras gauche formant d'une seule pièce, par coulée sous pression, un bras gauche (2) comprenant une partie avant gauche (2F) et une partie arrière gauche (2B), la partie avant gauche (2F) comportant un trou d'arbre de pivot gauche (2a) formant une partie gauche du trou d'arbre de pivot (15a) et comportant une paroi avant gauche (2b) définissant un deuxième espace (S2) comportant un côté droit ouvert et formant une partie gauche de la partie creuse (15c), la partie arrière gauche (2B) s'étendant vers l'arrière à partir de la partie avant gauche (2F) et comportant un trou d'essieu gauche (2f) formant une partie gauche du trou d'essieu (15f) ; et
une étape de liaison reliant la partie avant droite (3F) du bras droit (3) et la partie avant gauche (2F) du bras gauche (2) par l'intermédiaire de plusieurs éléments de fixation (5a à 5j) ; dans lequel :
l'étape de coulée du bras droit ou l'étape de coulée du bras gauche forme d'une seule pièce un bossage de support (4) pour supporter une extrémité d'une suspension arrière (44) sur uniquement un du bras droit (2) et du bras gauche (3), **caractérisé par** une étape de liaison reliant la partie avant droite (3F) du bras droit (3) et la partie avant gauche (2F) du bras gauche (2) par l'intermédiaire de plusieurs éléments de fixation (5a à 5j).
